# EUROPEAN PATENT APPLICATION

(11) **EP 4 462 255 A1**
(43) Date of publication of application: **13.11.2024**
(21) Application number: 22926379.3
(22) Date of filing: 15.02.2022
(51) Int. Cl.: G06F 9/50, B60W 60/00, B60W 50/00, G01C 21/26, G08G 1/16

(54) **INTELLIGENT DRIVING METHOD, DEVICE, AND VEHICLE COMPRISING SAID DEVICE**

(71) Applicant: Huawei Technologies Co., Ltd., Shenzhen, Guangdong 518129 (CN)
(72) Inventor: LU, Yuanzhi, Shenzhen, Guangdong 518129 (CN); QIU, Meiqing, Shenzhen, Guangdong 518129 (CN)
(74) Representative: Pfenning, Meinig & Partner mbB
(86) International application number: PCT/CN2022/076331
(87) International publication number: WO 2023/155041

(57) **Abstract**

This application relates to an autonomous driving apparatus, including a processing apparatus. The processing apparatus includes a plurality of processor cores. At least a part of processor cores in the plurality of processor cores are fixedly allocated to a specified task set. Fixed allocation means that the at least a part of processor cores in the plurality of processor cores are configured to process only the specified task set, and the specified task set is a non-empty set. Most of processor cores of an autonomous driving system are fixedly allocated to an autonomous driving task in advance, so that it can be ensured that, even in a multi-target (obstacle) scenario, computing power provided by processor cores can meet a sensing task and a planning task in the autonomous driving task in the foregoing various scenarios. Therefore, a problem that an autonomous driving policy cannot be provided in real time because the sensing task and the planning task cannot be processed timely is avoided.

## Description

### TECHNICAL FIELD

This application relates to the field of intelligent driving technologies, and in particular, to an intelligent driving method and apparatus, and a vehicle including the apparatus.

### BACKGROUND

In recent years, an intelligent driving technology develops rapidly. Intelligent driving may also be referred to as autonomous driving or assisted driving, and is an important direction of vehicle intelligence development. With development of a sensing technology and an improvement of a chip capability, intelligent driving provides increasingly abundant driving functions for people, and gradually implements driving experience of different levels. The society of automotive engineers (society of automotive engineers, SAE) provides a driving automation level standard, including driving levels L0 to L5. The level L0 is no automation, and a human driver is fully responsible for operating a vehicle, and during driving, may obtain a warning or assistance from a driving system, for example, autonomous emergency braking (autonomous emergency braking, AEB), blind spot monitoring (blind spot monitoring, BSM), or a lane departure warning (lane departure warning, LDW). The level L1 is driving support. A driving operation is jointly performed by a human driver and a driving system, the driving system may provide driving support for a steering wheel or a speeding up/down operation based on a driving environment, and another driving operation is performed by the human driver, for example, adaptive cruise control (adaptive cruise control, ACC) or lane keep assistance/support (lane keep assistance/support, LKA/LKS). The level L2 is partial automation. Driving support is provided for more of a steering wheel and a speeding up/down operation based on a driving environment, another driving action is performed by a human driver, for example, a vehicle following function in combination with adaptive cruise control (adaptive cruise control, ACC) and lane keep assistance (lane keep assistance, LKA). The level L3 is conditional automation. A driving system may complete all driving operations. However, a human driver needs to respond to a request of the driving system at a suitable time point, that is, the human driver needs to be ready to take over the driving system. The level L4 is high automation. A driving system may complete all driving operations, and a human driver does not necessarily need to respond to a request of the driving system. For example, when road and environment conditions permit (for example, a closed campus, a highway, an urban road, or a fixed driving route), the human driver may not take over driving. The level L5 is full automation. A driving system may independently complete driving operations under various road and environment conditions that can be handled by a human driver. It can be learned that, at the levels L0 to L2, the driving system mainly provides support for the driver, and the driver still needs to perform driving supervision, and perform steering, braking, or speeding up as required, to ensure safety. At the levels L3 to L5, the driving system can replace the driver to complete all the driving operations. At the level L3, the driver needs to be ready to take over driving. At the levels L4 and L5, the driving system can implement full driving under some or all conditions, and the driver can choose whether to take over driving.

Currently, for a vehicle having an intelligent driving capability (generally, the vehicle is a vehicle of which SAE level is L2 or above), when autonomous driving is performed, a common and difficult problem is that, when the vehicle is in a left-turn, head-turn, or roundabout scenario of a road, it is generally difficult for the vehicle to process an autonomous driving task in these scenarios. Main reasons are as follows: (1) In the left-turn scenario of the road, especially in a left-turn unprotected scenario (that is, there is no guide line for a turning lane at an intersection), at various level-crossing or overpass intersections, when traffic flow density is high, there are many obstacles, and the vehicle performs the autonomous driving task, it is difficult for the vehicle to process a game relationship with a plurality of obstacles. (2) There are a large quantity of targets (obstacles) that need to be identified at the intersection and there are also many types of targets. For example, static targets that need to be identified by the vehicle at the intersection include a lane line, a sidewalk, a stop line, a guide arrow sign, a speed limit sign, and the like; and dynamic targets that need to be identified include a bus, a truck, a passenger vehicle, a two-wheeled vehicle, a pedestrian, and the like. These dynamic targets usually may move at the same time (for example, a pedestrian and a vehicle simultaneously appear on a zebra crossing). An autonomous driving system of the vehicle needs to continuously track motion statuses of these dynamic obstacles, to continuously adjust an autonomous driving policy. Based on the foregoing reasons, in the left-turn scenario (especially in an urban left-turn scenario), an entire road system scenario (intersection) is an unstructured road, a right of way conflict and a competition relationship are complex and changeable, and a quantity of obstacles that need to be avoided is large and statuses are changeable. This causes an instantaneous peak of a requirement of the autonomous driving system of the vehicle on computing power resources. The instantaneous peak of the requirement on the computing power makes the autonomous driving system unable to timely process current information. Consequently, a real-time and available autonomous driving policy cannot be provided, and a traffic accident may be finally caused.

Further, in some other road scenarios (for example, turning right at an intersection or a roundabout), the foregoing case in which there are a large quantity of targets and a right of way conflict and a competition relationship are complex and changeable usually still exists. Therefore, an instantaneous computing power peak requirement is usually generated for the autonomous driving system of the vehicle, and a problem similar to the foregoing problem is caused.

In conclusion, an intelligent driving method is required, so that the autonomous driving system of the vehicle can stably and reliably process a road scenario (especially the left-turn scenario) in which a plurality of dynamic targets are tracked, to improve autonomous driving safety of the vehicle.

### SUMMARY

In some embodiments, an autonomous driving apparatus is provided. The autonomous driving apparatus may be used for a vehicle having an intelligent driving capability (for example, any one of the foregoing vehicles having the autonomous driving capabilities at the levels L2 to L5). The autonomous driving apparatus includes a processing apparatus. The processing apparatus includes a plurality of processor cores. At least a part of processor cores in the plurality of processor cores are fixedly allocated to a specified task set. Fixed allocation means that the at least a part of processor cores in the plurality of processor cores are configured to process only the specified task set, and the specified task set is a non-empty set. Most of processor cores of an autonomous driving system are fixedly allocated to an autonomous driving task in advance, so that it can be ensured that, even in a multi-target (obstacle) scenario, computing power provided by processor cores can meet a sensing task and a planning task in the autonomous driving task in the foregoing various scenarios. Therefore, a problem that an autonomous driving policy cannot be provided in real time because the sensing task and the planning task cannot be processed timely is avoided.

In some embodiments, the autonomous driving apparatus further includes a sensing system configured to obtain sensing information of an ego vehicle. The sensing system includes at least one of the following: a lidar, a millimeter-wave radar, a camera, and an ultrasonic radar. A plurality of sensors of a same type may be disposed on a vehicle having an intelligent driving capability. For example, two or three lidars may be disposed on the vehicle. The specified task set includes the sensing task, and the sensing task includes that the at least a part of processor cores process information obtained by the sensing system and obtain environment information and obstacle information around a vehicle.

In some embodiments, the obstacle information includes at least one of the following: static obstacle information and dynamic obstacle information. A static obstacle may include, for example, a house on a roadside, a vehicle parked on a roadside, a road lamp post, or a garbage bin. A dynamic obstacle may include, for example, a vehicle in driving or a pedestrian in moving.

In some embodiments, the autonomous driving apparatus further includes a planning system. The specified task set includes the planning task, and the planning task includes that the at least a part of processor cores determine a driving planning policy of the vehicle based on motion information of the vehicle and the obstacle information.

In some embodiments, the sensing task includes at least one of the following: a lane detection (LD) task for identifying a lane line around the vehicle, vehicle detection (VD) for identifying another vehicle around the vehicle, and Radar and LiDar (RL) for performing fusion on different sensor information, to perform sensing and tracking on a key target around the vehicle, where the key target includes a vulnerable road user (VRU). The planning task includes at least one of the following: global route planning (Router), a finite status machine (FSM), and motion control (MOP) for the vehicle.

In some embodiments, at least one processor core in the at least a part of processor cores is fixedly allocated to one task in the sensing task; and/or at least one processor core in the at least a part of processor cores is fixedly allocated to one task in the planning task. The autonomous driving task mainly includes the sensing task and the planning task. The planning system plans a driving policy of the vehicle based on the information obtained by the sensing system, and fixedly allocates at least a part of the plurality of processor cores to the sensing task and/or the planning task, to ensure that the planning task can be successfully completed in an autonomous driving process of the vehicle.

In some embodiments, the at least one processor core in the at least a part of processor cores is fixedly allocated for performing sensing and tracking on the key target around the vehicle, where the key target includes the vulnerable road user (VRU). In a process of autonomous driving of the vehicle, safety is a first-priority task. The task of sensing and tracking the key target around the vehicle is fixedly allocated to the at least one processor core, and it can be ensured that the vehicle can continuously and consistently track the key target around the vehicle in a complex scenario, in particular, track the vulnerable road user, for example, a pedestrian. This can prevent a safety accident caused by a tracking interruption.

In some embodiments, the autonomous driving apparatus obtains a decision solution set of the ego vehicle based on the sensing information; obtains, from the decision solution set, a first decision solution used for performing a first interaction phase between the ego vehicle and the game target; in a process of controlling, based on the first decision solution, the ego vehicle to drive, determines that the ego vehicle and the game target meet a condition for entering a second interaction phase; obtains, from the decision solution set, a second decision solution used for performing the second interaction phase between the ego vehicle and the game target; and controls, based on the second decision solution, the ego vehicle to drive. An interaction game policy is used, so that the vehicle can make a suitable autonomous driving policy in real time based on a surrounding case.

In some embodiments, the first interaction phase is a phase in which an interaction relationship between the ego vehicle and the game target is unclear, and the second interaction phase is a phase in which an interaction relationship between the ego vehicle and the game target is clear. Cases of the vehicles and the surrounding environments are divided into an unclear interaction phase and a clear interaction phase, so that game policies of different vehicles and surrounding environments are determined. In the phase in which the interaction relationship is unclear, the vehicle may select and switch between a plurality of interaction policies (because there is no policy with an optimal benefit currently). In a phase in which the interaction relationship is clear, the vehicle generally has a policy with an optimal benefit.

In some embodiments, the autonomous driving apparatus is configured to: determine at least one target based on the sensing information; obtain a future motion track of the at least one target; obtain a future motion track of the ego vehicle; determine, as the game target in the at least one target, a target of which future motion track overlaps the future motion track of the ego vehicle; and continuously track a status of the game target in a process in which the ego vehicle and the game target perform the first interaction phase. Game target and non-game target distinguishing are performed on a target (obstacle) around the vehicle, so that the vehicle can continuously pay attention to the game target (namely, a target that may conflict with the vehicle in the future), so that computing power of a processor core can be reduced or even not continuously allocated to the non-game target (namely, a target that may not conflict with the vehicle in the future), to save computing power.

In some embodiments, an intelligent driving vehicle is included, and the intelligent driving vehicle includes the autonomous driving apparatus in the foregoing various embodiments.

### BRIEF DESCRIPTION OF DRAWINGS

FIG. 1 is a schematic diagram of composition of an intelligent driving vehicle;
FIG. 2 is a schematic diagram of a framework of an autonomous driving system according to an embodiment of this application;
FIG. 3-1 is a schematic diagram of a common scenario in autonomous driving;
FIG. 3-2 is a schematic diagram of a common scenario in autonomous driving;
FIG. 4 shows a quantity of targets tracked by an autonomous driving vehicle in a period of time in an actual scenario;
FIG. 5 is a schematic diagram of a common scenario in autonomous driving;
FIG. 6 is a schematic diagram of a common scenario in autonomous driving;
FIG. 7 is a schematic diagram of a common scenario in autonomous driving;
FIG. 8 is a schematic diagram of a common scenario in autonomous driving;
FIG. 9 is a schematic diagram of a common scenario in autonomous driving;
FIG. 10 is a schematic diagram of a processor core of an autonomous driving system;
FIG. 11 is a schematic diagram of a common scenario in autonomous driving;
FIG. 12 is a schematic diagram of determining a game target of an ego vehicle according to an embodiment of this application;
FIG. 13 is a schematic diagram of a principle of determining a decision solution set of an ego vehicle according to an embodiment of this application;
FIG. 14 is a schematic diagram of marking a decision solution set of an ego vehicle according to an embodiment of this application;
FIG. 15 is a schematic diagram of an evaluation dimension for performing benefit assessment on a decision solution of an ego vehicle according to an embodiment of this application;
FIG. 16 is a schematic diagram of an offset interval according to an embodiment of this application;
FIG. 17 is a schematic diagram of processing an action sequence of an ego vehicle according to an embodiment of this application; and
FIG. 18 is a schematic flowchart of an interaction game between an ego vehicle and a game target according to an embodiment of this application.

### DESCRIPTION OF EMBODIMENTS

The following describes various example embodiments, features, and aspects of this application in detail with reference to accompanying drawings. Identical reference numerals in the accompanying drawings indicate elements that have same or similar functions. Although various aspects of embodiments are illustrated in the accompanying drawing, the accompanying drawings are not necessarily drawn in proportion unless otherwise specified.

A specific term "example" herein means "used as an example, embodiment or illustration". Any embodiment described as "example" is not necessarily explained as being superior or better than other embodiments.

The following first describes an autonomous driving vehicle (or referred to as an intelligent driving vehicle) and system by using an example. It should be understood that "autonomous driving" or "autonomous driving vehicle" in subsequent parts of this application refers to a vehicle having a capability at L2 or above based on an SAE level.

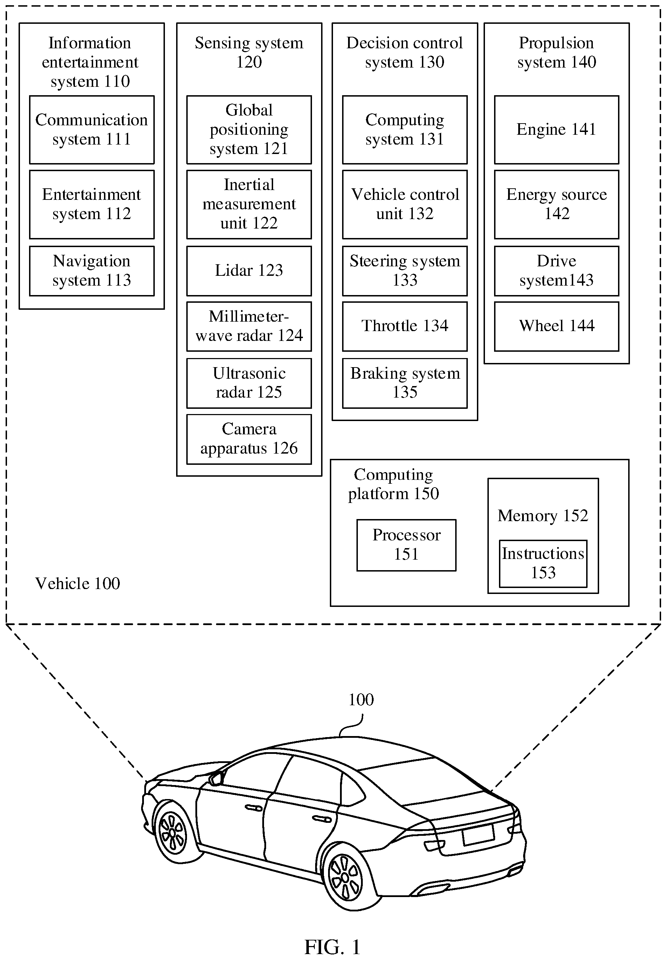

FIG. 1 is a schematic functional block diagram of a vehicle 100. The vehicle 100 may be configured to be in a full or partial autonomous driving mode. For example, the vehicle 100 may obtain environment information around the vehicle 100 by using a sensing system 120, and obtain an autonomous driving policy based on analysis of the surrounding environment information, to implement full-autonomous driving, or present an analysis result to a user, to implement partial autonomous driving.

The vehicle 100 may include various subsystems, such as an information entertainment system 110, the sensing system 120, a decision control system 130, a propulsion system 140, and a computing platform 150. Optionally, the vehicle 100 may include more or fewer subsystems, and each subsystem may include a plurality of components. In addition, each subsystem and component of the vehicle 100 may be interconnected in a wired or wireless manner.

In some embodiments, the information entertainment system 110 may include a communication system 111, an entertainment system 112, and a navigation system 113.

The communication system 111 may include a wireless communication system, and the wireless communication system may communicate with one or more devices in wireless manner directly or by using a communication network. For example, a wireless communication system 146 may use 3G cellular communication such as CDMA, EVD0, and GSM/GPRS, or 4G cellular communication such as LTE, or 5G cellular communication. The wireless communication system may communicate with a wireless local area network (wireless local area network, WLAN) by using Wi-Fi. In some embodiments, the wireless communication system 146 may directly communicate with a device by using an infrared link, Bluetooth, or ZigBee. As for various vehicle communication systems in other wireless protocols, for example, the wireless communication system may include one or more dedicated short range communication (dedicated short range communication, DSRC) devices, and these devices may include public and/or private data communication between vehicles and/or roadside stations.

The entertainment system 112 may include a central control screen, a microphone, and a sounder. A user may listen to radio and play music in a vehicle through the entertainment system. Alternatively, a mobile phone is connected to a vehicle, to realize screen projection of the mobile phone on the central control screen. The central control screen may be a touchscreen, and the user may perform an operation by touching the screen. In some cases, a voice signal of the user may be obtained by using the microphone, and some control performed by the user on the vehicle 100 is implemented based on analysis of the voice signal of the user, for example, a temperature inside the vehicle is adjusted. In other cases, music may be played for the user by using the sounder.

The navigation system 113 may include a map service provided by a map supplier, to provide navigation of a driving route for the vehicle 100. The navigation system 113 may be used together with a global positioning system 121 and an inertial measurement unit 122 of the vehicle. The map service provided by the map provider may be a two-dimensional map or a high-definition map.

The sensing system 120 may include several types of sensors that sense and detect the surrounding environment information of the vehicle 100. For example, the sensing system 120 may include the global positioning system 121 (the global positioning system may be a GPS system, or may be a BeiDou system or another positioning system), the inertial measurement unit (inertial measurement unit, IMU) 122, a lidar 123, a millimeter-wave radar 124, an ultrasonic radar 125, and a camera apparatus 126. The sensing system 120 may further include sensors (for example, an in-vehicle air quality monitor, a fuel gauge, and an oil temperature gauge) of an internal system of the vehicle 100 that is monitored. Sensor data from one or more of these sensors can be used to detect an object and corresponding features (a position, a shape, a direction, a speed, and the like) of the object. Such detection and identification are key functions of a safe operation of the vehicle 100.

The global positioning system 121 may be configured to estimate a geographical location of the vehicle 100.

The inertial measurement unit 122 is configured to sense and detect a position and an orientation change of the vehicle 100 based on an inertial acceleration. In some embodiments, the inertial measurement unit 122 may be a combination of an accelerometer and a gyroscope.

The lidar 123 may sense and detect, by using a laser, an object in an environment in which the vehicle 100 is located. In some embodiments, the lidar 123 may include one or more laser sources, a laser scanner, one or more detectors, and other system components.

The millimeter-wave radar 124 may sense and detect an object in a surrounding environment of the vehicle 100 by using a radio signal. In some embodiments, in addition to sensing and detecting an object, the radar 126 may further be configured to sense and detect a speed and/or a moving direction of the object.

The ultrasonic radar 125 may sense and detect an object around the vehicle 100 by using an ultrasonic signal.

The camera apparatus 126 may be configured to capture image information of the surrounding environment of the vehicle 100. The camera apparatus 126 may include a monocular camera device, a binocular camera device, a structured light camera device, a panorama camera device, and the like. The image information obtained by using the camera apparatus 126 may include a static image, or may include video stream information.

The decision control system 130 includes a computing system 131 that performs analysis and decision based on information obtained by the sensing system 120. The decision control system 130 further includes a vehicle control unit 132 that controls a power system of the vehicle 100, and a steering system 133, a throttle 134 (including an accelerator pedal of an electric vehicle, which is a name in some embodiments herein), and a braking system 135 that are configured to control the vehicle 100.

The computing system 131 may operate to process and analyze various information obtained by the sensing system 120 to identify a target, an object, and/or a feature in the surrounding environment of the vehicle 100. The target may include a pedestrian or an animal, and the object and/or the feature may include a traffic signal, a road boundary, and an obstacle. The computing system 131 may use technologies such as an object identification algorithm, a structure from motion (Structure from Motion, SFM) algorithm, and video tracking. In some embodiments, the computing system 131 may be configured to: map an environment, track an object, estimate a speed of an object, and the like. The computing system 131 may analyze the obtained various information and obtain a control policy for the vehicle.

The vehicle control unit 132 may be configured to coordinate and control a power battery and an engine 141 of the vehicle, to improve power performance of the vehicle 100.

The steering system 133 may be operated to adjust a moving direction of the vehicle 100. For example, in an embodiment, the steering system 133 may be a steering wheel system.

The throttle 134 is configured to control an operating speed of the engine 141 and control a speed of the vehicle 100.

The braking system 135 is configured to control the vehicle 100 to speeding down. The braking system 135 may slow down a wheel 144 by using a friction force. In some embodiments, the braking system 135 may convert kinetic energy of the wheel 144 into a current. The braking system 135 may also slow down a rotation speed of the wheel 144 by using other forms, to control the speed of the vehicle 100.

The propulsion system 140 may include a component that provides power for the vehicle 100 to move. In an embodiment, the propulsion system 140 may include the engine 141, an energy source 142, a drive system 143, and the wheel 144. The engine 141 may be an internal combustion engine, an electric motor, an air compression engine, or a combination of other types of engines, for example, a hybrid engine formed by a gasoline engine and an electric motor, or a hybrid engine formed by an internal combustion engine and an air compression engine. The engine 141 converts the energy source 142 into mechanical energy.

Examples of the energy source 142 include gasoline, diesel, other oil-based fuels, propane, other compressed gas-based fuels, ethyl alcohol, solar panels, batteries, and other power sources. The energy source 142 may also provide energy for another system of the vehicle 100.

A drive apparatus 143 may transmit mechanical power from the engine 141 to the wheel 144. The drive apparatus 143 may include a gearbox, a differential, and a drive shaft. In an embodiment, the drive apparatus 143 may further include another component, for example, a clutch. The drive shaft may include one or more shafts that may be coupled to one or more wheels 121.

Some or all functions of the vehicle 100 are controlled by the computing platform 150. The computing platform 150 may include at least one processor 151, and the processor 151 may execute instructions 153 stored in a non-transitory computer-readable medium such as a memory 152. In some embodiments, the computing platform 150 may alternatively be a plurality of computing devices that control individual components or subsystems of the vehicle 100 in a distributed manner.

The processor 151 may be any conventional processor, such as a commercially available CPU. Alternatively, the processor 151 may further include a graphic process unit (Graphic Process Unit: GPU), a field programmable gate array (Field Programmable Gate Array: FPGA), a system on chip (System on Chip: SoC), an application-specific integrated circuit (Application-Specific Integrated Circuit: ASIC), or a combination thereof. Although FIG. 1 functionally illustrates the processor, the memory, and other elements of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Thus, it is understood that a reference to the processor or the computer includes a reference to a set of processors or computers or memories that may or may not operate in parallel. Different from using a single processor to perform the steps described herein, some components such as a steering component and a speeding down component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while others are performed by a remote processor, including performing steps necessary for single manipulation.

In some embodiments, the memory 152 may include the instructions 153 (for example, program logics), and the instructions 153 may be executed by the processor 151 to perform various functions of the vehicle 100. The memory 152 may also include additional instructions, including instructions used to send data to, receive data from, interact with, and/or control one or more of the information entertainment system 110, the sensing system 120, the decision control system 130, and the propulsion system 140.

In addition to the instructions 153, the memory 152 may further store data, such as a road map, route information, a position, a direction, a speed, and other vehicle data of the vehicle, and other information. This information may be used by the vehicle 100 and the computing platform 150 during operation of the vehicle 100 in autonomous, semi-autonomous, and/or manual modes.

The computing platform 150 may control the functions of the vehicle 100 based on inputs received from various subsystems (for example, the propulsion system 140, the sensing system 120, and the decision control system 130). For example, the computing platform 150 may utilize an input from the decision control system 130 to control the steering system 133 to avoid obstacles detected by the sensing system 120. In some embodiments, the computing platform 150 may operate to provide control over many aspects of the vehicle 100 and the subsystems of the vehicle 100.

Optionally, one or more of the foregoing components may be installed separately from or associated with the vehicle 100. For example, the memory 152 may exist partially or completely separate from the vehicle 100. The foregoing components may be communicatively coupled together in a wired and/or wireless manner.

Optionally, the foregoing components are merely examples. During actual application, components in the foregoing modules may be added or removed based on an actual requirement. FIG. 1 should not be construed as a limitation on this embodiment of this application.

An autonomous driving vehicle traveling on a road, for example, the vehicle 100, may identify an object in a surrounding environment of the autonomous driving vehicle, to determine to adjust a current speed. The object may be another vehicle, a traffic control device, or another type of object. In some examples, each identified object may be considered independently, and a feature of each object, such as a current speed of the object, an acceleration of the object, and an interval between the object and the vehicle may be used to determine a speed to be adjusted by the autonomous driving vehicle.

Optionally, the vehicle 100 or a sensing and computing device (for example, the computing system 131 and the computing platform 150) associated with the vehicle 100 may predict a behavior of the identified object based on the features of the identified object and a state of the surrounding environment (for example, traffic, rain, and ice on the road). Optionally, all identified objects depend on behaviors of each other, and therefore all the identified objects may be considered together to predict a behavior of a single identified object. The vehicle 100 can adjust the speed of the vehicle 100 based on the predicted behavior of the identified object. In other words, the autonomous driving vehicle can determine, based on the predicted behavior of the object, a stable state to which the vehicle needs to be adjusted (for example, speeding up, speeding down, or stop). In this process, another factor may also be considered to determine the speed of the vehicle 100, for example, a horizontal position of the vehicle 100 on a road on which the vehicle drives, curvature of the road, and proximity between a static object and a dynamic object.

In addition to providing an instruction for adjusting the speed of the autonomous driving vehicle, the computing device may further provide an instruction for modifying a steering angle of the vehicle 100, so that the autonomous driving vehicle follows a given track and/or maintains safe lateral and longitudinal distances between the autonomous driving vehicle and an object (for example, a car on an adjacent lane on the road) near the autonomous driving vehicle.

The vehicle 100 may be a car, a truck, a motorcycle, a bus, a boat, an airplane, a heficopter, a lawn mower, a recreational vehicle, a playground vehicle, a construction device, a trolley, a golf cart, a train, or the like. This is not specifically limited in embodiments of this application.

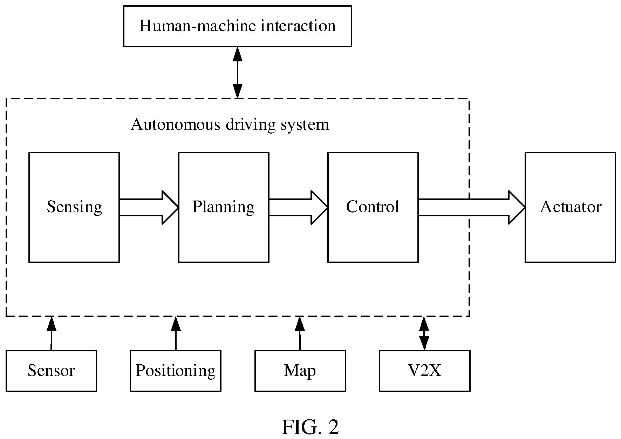

FIG. 2 is a schematic diagram of a framework of an autonomous driving system in some embodiments. From a perspective of a logical function, the autonomous driving system mainly includes a sensing module, a planning module, and a control module.

The autonomous driving system may also be referred to as an autonomous driving system (automated driving system, ADS) or a driving assistant system, for example, an advanced driver assistant system (advanced driving assistant system, ADAS). The autonomous driving system uses a sensor on a vehicle to obtain information about the vehicle and surrounding information of the vehicle, and analyzes and processes the obtained information, to implement functions such as obstacle sensing, target identification, vehicle positioning, route planning, and driver monitoring/reminder, so as to improve driving safety, automation, and comfort of the vehicle.

The sensing module has an environment sensing capability, for example, may identify an obstacle around the vehicle, detect a road mark, identify a signal light, and detect a behavior of a pedestrian/vehicle around the vehicle. To improve the environment sensing capability of the autonomous driving system, increasing types and/or a larger quantity of sensors, such as a lidar, a millimeter-wave radar, and a camera, are disposed on the vehicle. The sensing module may further have a capability of sensing the vehicle, and there are more types of sensors that sense a status of the vehicle, including sensors configured to measure a speed, a temperature, pressure, a flow, a position, a gas concentration, light brightness, dry humidity, a distance, and the like. For example, the sensing module may obtain a speed of the vehicle by using a speed sensor, and obtain a position of an accelerator pedal or a braking pedal by using a position sensor. In addition, the sensing module may determine a position of the vehicle relative to an environment by using a localization (localization) system. The localization system is, for example, a global positioning system (global positioning system, GPS) and/or an inertial navigation system (inertial navigation system).

The sensing module obtains the information about the vehicle and the surrounding information of the vehicle by using the sensor, and may process the obtained information and provide processed information to the planning module. The processing includes, for example, information fusion (information fusion) of a plurality of sensors, to improve accuracy of sensing information. In this case, the sensing module may also be referred to as a sensing and fusion module.

The planning module makes a driving decision or driving planning based on information provided by the sensing module. For example, a decision on a next driving behavior of the vehicle is made based on information about an environment in which the vehicle is currently located, for example, speeding up/speeding down, lane change, steering, braking, or warning. In addition, the autonomous driving system may further implement information exchange with a person (including a driver or a passenger) on the vehicle through human-machine interaction, to obtain a requirement of the person on the vehicle, and feed back a current status or an alarm of the vehicle to the person on the vehicle. The planning module may further perform route decision or route planning. For example, an optimal route is selected based on a requirement of a user. The requirement of the user includes one or more of a start point, an end point, a passing place, a route preference, and the like.

The control module performs corresponding control based on the driving decision of the planning module, for example, sends a control instruction to a corresponding executor or a controller of the executor, to control the executor to perform a corresponding action, for example, speeding up/speeding down, lane change, steering, braking, or warning.

An input of the autonomous driving system not only includes an information input of a sensor of the autonomous driving system, but also may include an information input obtained elsewhere, to improve autonomous driving performance. For example, the autonomous driving system may obtain map information from a server of a map provider, to assist in driving decision. For another example, the autonomous driving system may obtain driving environment information from a cloud, for example, weather information and traffic status information (for example, information such as a vehicle flow rate and an average speed of a vehicle flow), to assist in driving decision. For another example, the autonomous driving system may obtain driving information and/or sensing information of another vehicle from another intelligent terminal (for example, another intelligent vehicle or a portable terminal of a pedestrian), to assist in driving decision. The autonomous driving system may obtain information elsewhere by using a wireless communication technology. The wireless communication technology is, for example, cellular network-based communication or dedicated short range communication (dedicated short range communication, DSRC), and the cellular network-based communication is, for example, a long term evolution (long term evolution, LTE) communication technology or a 5th generation (5th generation, 5G) communication technology. The cellular network-based communication includes vehicle-to-everything (vehicle-to-everything, V2X) communication, and the V2X communication includes vehicle-to-vehicle (vehicle-to-vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, and the like. This provides a plurality of ways for the vehicle to obtain information, enriches input information of the autonomous driving system, and improves autonomous driving performance.

In addition, the autonomous driving system is implemented requiring large computing power, and is usually implemented by using a dedicated hardware platform, for example, a multi domain controller (Multi Domain Controller, MDC). In other words, all or some functions of the sensing module, the planning module, and the control module are implemented by using the dedicated hardware platform, for example, the MDC. Software in the autonomous driving system may be upgraded. For example, an information processing algorithm of the sensing module or a decision algorithm of the planning module may be upgraded in a software update manner. Software update may be implemented by using an over the air (over the air, OTA) technology.

It should be understood that the "intelligent driving vehicle" is generally a vehicle of which SAE level is L2 or above.

In the following descriptions, an "ego vehicle" is generally used to represent a main vehicle including the autonomous driving system. It should be understood that the ego vehicle is a representative designated for ease of description by using a vehicle in which a driver is located.

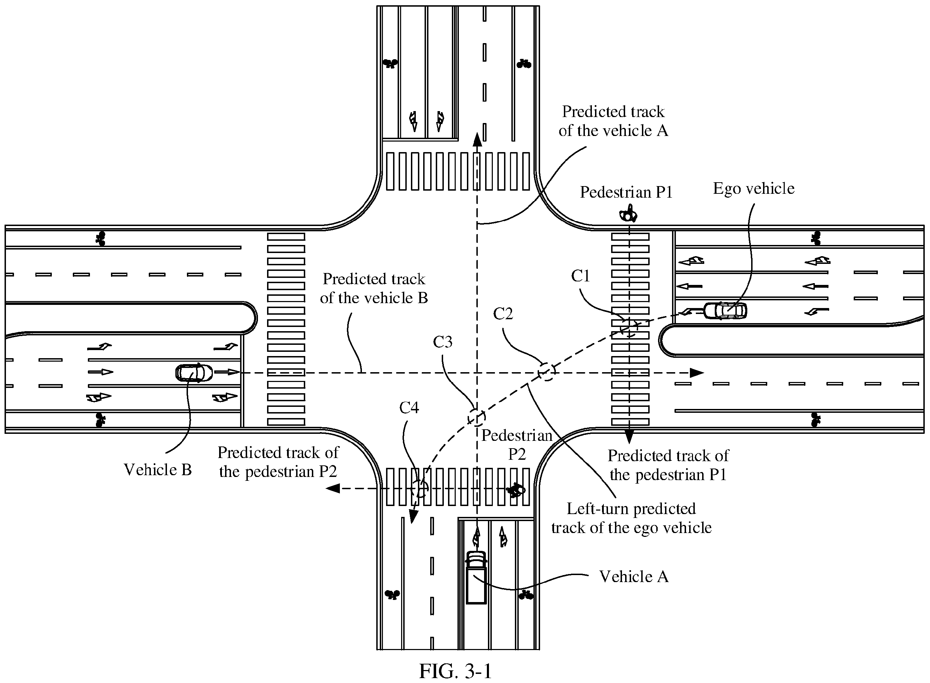

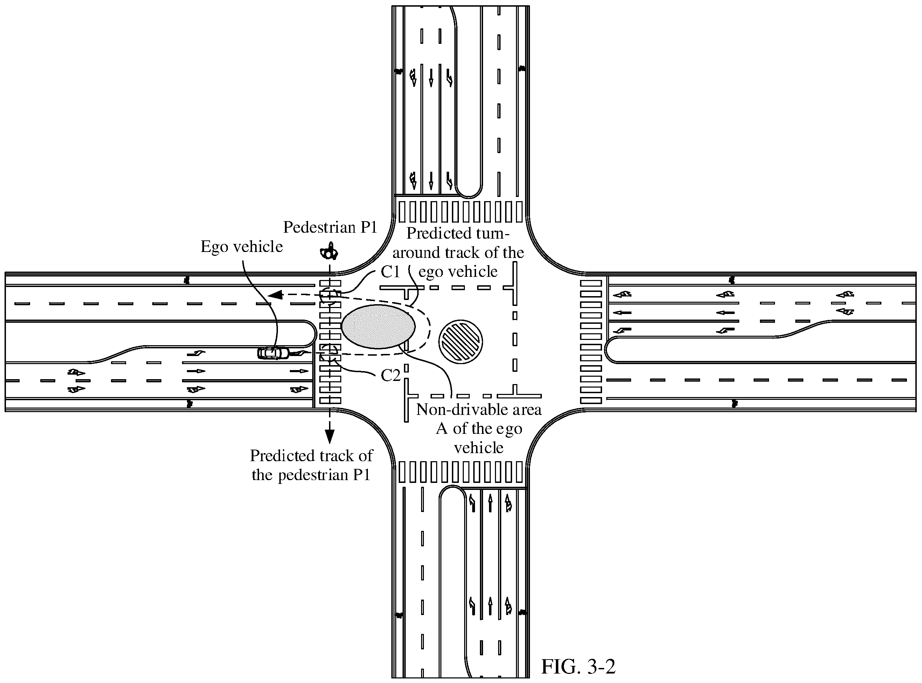

FIG. 3-1 shows an example of a left-turn scenario of the ego vehicle at a crossroad. A right side of FIG. 3-1 shows that the ego vehicle waits to turn left on a left-turn dedicated lane. Four obstacles are shown around the ego vehicle, and are as follows: a vehicle A, a vehicle B, a pedestrian P1, and a pedestrian P2. The autonomous driving system of the ego vehicle analyzes the four obstacles and separately predicts tracks of the four obstacles. As shown in FIG. 1, a predicted track of the vehicle A is that the vehicle A goes straight and passes through the intersection from south to north, a predicted track of the vehicle B is that the vehicle B goes straight and passes through the intersection from west to east, a predicted track of the pedestrian P1 is that the pedestrian P1 passes through a zebra crossing from north to south, and a predicted track of the pedestrian P2 is that the pedestrian P2 passes through a zebra crossing from east to west. A "predicted motion track" of turning left performed by the ego vehicle is shown in the figure. Most intersections have traffic lights, if all traffic participants strictly follow indications of the traffic lights to move, there is no conflict between all the traffic participants in theory. However, there are some cases. For example: 1. Traffic lights are not installed at some intersections. 2. The traffic lights are faulty. 3. After 23:00, the traffic lights may turn to yellow and blink only to indicate slow driving. In these cases, a large quantity of conflicts (namely, C1 to C4 shown in FIG. 3) may occur between the ego vehicle and other traffic participants (which are obstacles for the ego vehicle). To avoid a traffic accident caused by a conflict, the ego vehicle needs to track these traffic participants in real time and continuously, and adjust an autonomous driving policy (whether to preempt, yield, or brake) in real time based on a real-time case of each traffic participant. In this case, a real-time high computing power requirement is raised for the autonomous driving system of the ego vehicle. The autonomous driving system of the ego vehicle usually fails to operate normally due to this high computing power requirement, resulting in stalling. As a result, the autonomous driving system of the ego vehicle cannot process a current case in real time and in a timely manner, and cannot plan a real-time and effective autonomous driving policy.

It should be further understood that, when the vehicle performs a left-turn U-shaped turn, because a drivable space range of the vehicle is usually small (a U-shaped turn requires a large turning radius and space), and a track of the U-shaped turn of the vehicle usually has two possible conflicts (crosses) with a track of the pedestrian on the zebra crossing. As a result, the foregoing cases may be more serious. FIG. 3-2 shows a scenario in which the ego vehicle performs a U-shaped turn. FIG. 3-2 shows a pedestrian P1 and a motion track of the pedestrian P1 predicted by the autonomous driving system of the ego vehicle. It should be understood that, although FIG. 3-2 shows only one pedestrian P1, as described above, in an actual traffic scenario, there may be a large quantity of pedestrians (for example, a case in which dozens or even dozens of pedestrians cross a zebra crossing). It can be learned that there are two possible conflict positions C1 and C2 between a predicted U-shaped turn track of the ego vehicle and a predicted track of the pedestrian P1. FIG. 3-2 further shows a non-drivable area A of the ego vehicle. The non-drivable area A of the ego vehicle is an area that is determined by a size of the vehicle and a turning radius of the vehicle and that cannot be entered when the ego vehicle performs the U-shaped turn. In other words, when the ego vehicle performs the U-shaped turn, there is a small area that is on a road and that is left for the ego vehicle to plan a driving route. Based on these cases, it can be learned that, when the ego vehicle performs the U-shaped turn, the foregoing problem also occurs, and the foregoing problem may be more severe.

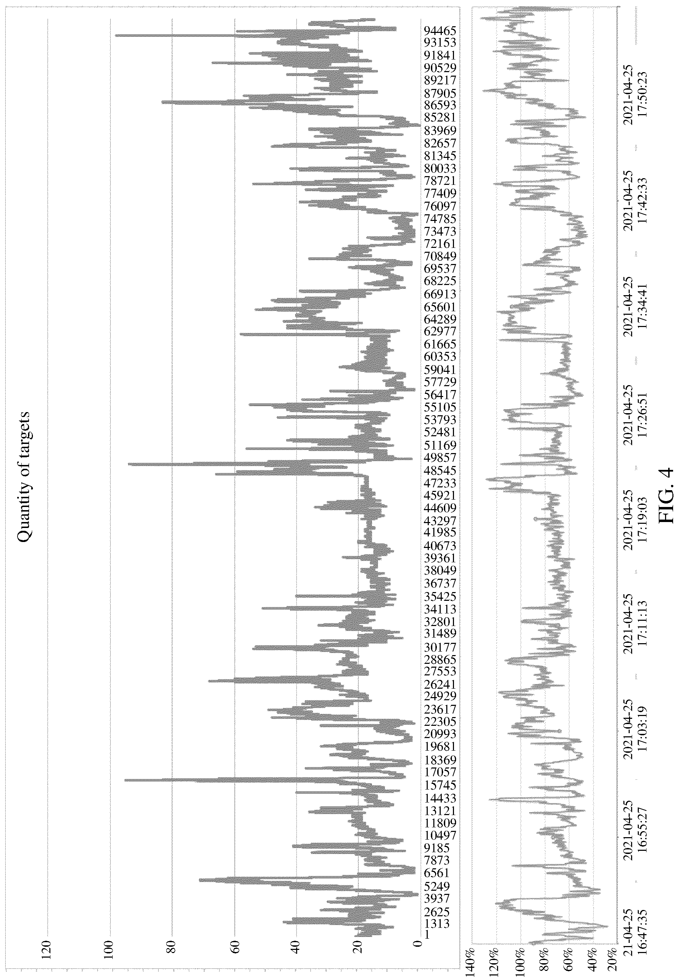

It should be understood that FIG. 3-1 and FIG. 3-2 are merely examples of some scenarios. In an actual urban traffic scenario, generally, there may be a dozen to dozens of obstacles, and in an urban intersection scenario, there may be even hundreds of obstacles. FIG. 4 shows a quantity of targets (obstacles) tracked by an autonomous driving vehicle in a period of time in an actual scenario. It can be learned that the quantity of targets at a peak value may reach almost 100. In this case, a computing power requirement of an autonomous driving system of the vehicle is greatly affected, and the foregoing various problems are caused.

It should be further understood that, even if traffic lights are provided at the intersection and the traffic lights work normally (that is, the traffic lights display in red, green, and yellow in a suitable order), there is still a case in which a traffic participant moves without strictly following an indication of the traffic lights. Typical scenarios include: A vehicle runs a red light, a vehicle runs a blinking yellow light (that is, the vehicle speeds up to pass through an intersection when a yellow light blinks and the light is about to become a red light), a pedestrian runs a red light, and the like. Therefore, even when the traffic lights at the intersection work normally, the autonomous driving system of the vehicle at the intersection still needs to continuously monitor and predict each traffic participant. Therefore, a computing power requirement of the autonomous driving system of the vehicle is still high, and the foregoing various problems are also caused.

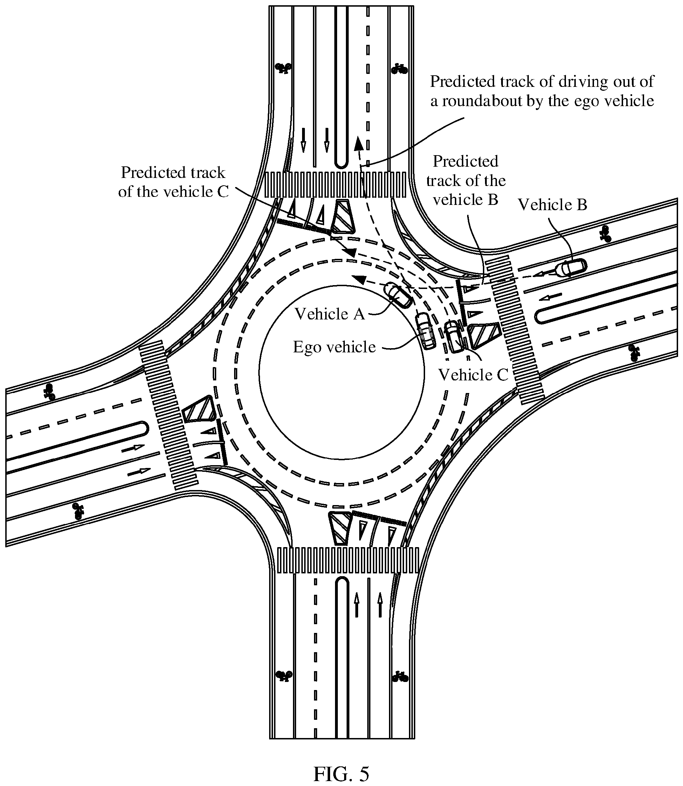

FIG. 5 shows a scenario in which a vehicle drives out of a roundabout when the vehicle is on the roundabout. As shown in FIG. 5, the ego vehicle plans to drive out of the roundabout at a next roundabout intersection based on a predicted track. There is a vehicle A in the left front of the ego vehicle, there is a vehicle C in the right rear of the ego vehicle, and a vehicle B is about to drive into the roundabout at another intersection. It can be learned from FIG. 5 that, the predicted track of the ego vehicle may conflict with a predicted track of the vehicle B and a predicted track of the vehicle C, and the predicted track of the ego vehicle may conflict with that of the left-front vehicle A. A person skilled in the art should understand that FIG. 5 merely shows the ego vehicle and the surrounding vehicles A, B, and C for example. In an actual roundabout scenario, there may be dozens or even dozens of vehicles around the ego vehicle. In addition, in the roundabout scenario, exits/entrances at which vehicles leaves/leaves the roundabout may be different, and consequently, a conflict is prone to occur. Therefore, in the roundabout scenario, a real-time high computing power requirement is also raised for an autonomous driving system of the ego vehicle. The autonomous driving system of the ego vehicle usually fails to operate normally due to this high computing power requirement, resulting in stalling. As a result, the autonomous driving system of the ego vehicle cannot process a current case in real time and in a timely manner, and cannot plan a real-time and effective autonomous driving policy.

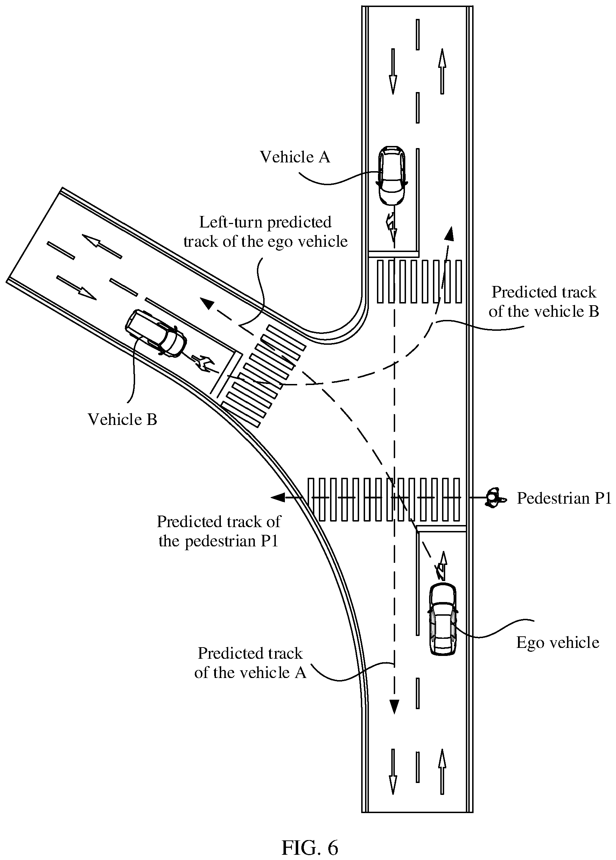

Even in some seemingly "simple" scenario structures, a problem similar to the foregoing problem may still occur. As shown in FIG. 6, at a Y-shaped intersection, the ego vehicle expects to pass through an intersection area and turn left to a branch of the Y-shaped intersection, a vehicle A in an opposite direction of the ego vehicle is predicted to pass through the intersection area and continue to go straight, and at a branch of the Y-shaped intersection, a vehicle B is predicted to pass through the intersection area and enter a lane in an opposite direction of a current lane of the ego vehicle. In the right front of the ego vehicle, a pedestrian P1 plans to cross a sidewalk. It can be learned from FIG. 6 that a left-turn predicted track of the ego vehicle may conflict with predicted tracks of the vehicle A, vehicle B, and pedestrian. A person skilled in the art should understand that FIG. 6 shows the ego vehicle, the vehicles A and B, and the pedestrian P1 around the ego vehicle only for example. In an actual scenario, there may be dozens or even dozens of vehicles around the ego vehicle, and there may be dozens or even dozens of pedestrians. Therefore, even in this seemingly "simple" Y-shaped intersection scenario, a real-time high computing power requirement is raised for the autonomous driving system of the ego vehicle. The autonomous driving system of the ego vehicle usually fails to operate normally due to this high computing power requirement, resulting in stalling. As a result, the autonomous driving system of the ego vehicle cannot process a current case in real time and in a timely manner, and cannot plan a real-time and effective autonomous driving policy.

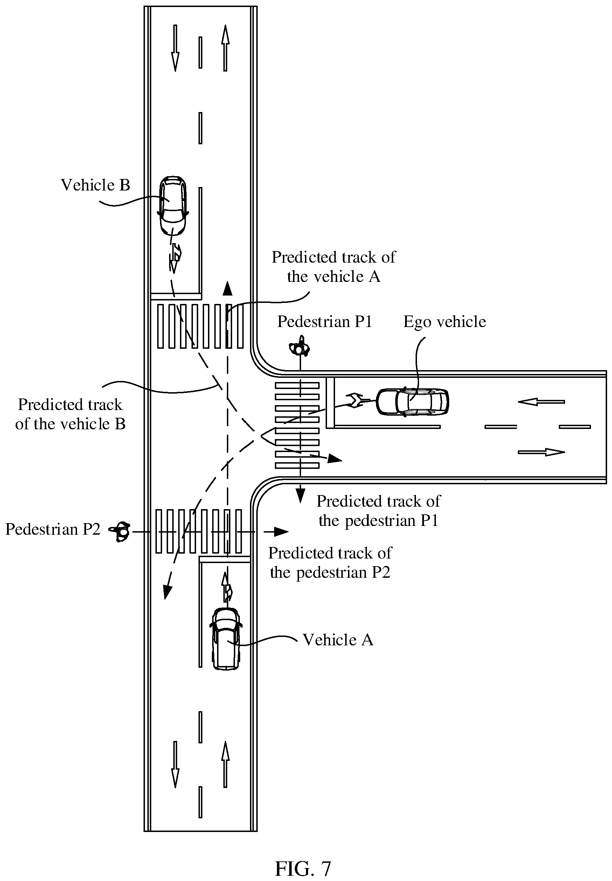

In a T-shaped intersection scenario shown in FIG. 7, the ego vehicle is predicted to pass through an intersection area and turn left, and predicted tracks of a vehicle A, a vehicle B, a pedestrian P1, and a pedestrian P2 are separately shown in FIG. 7. It can be learned from FIG. 7 that the left-turn predicted track of the ego vehicle may conflict with the predicted tracks of the vehicle A, vehicle B, and the pedestrians P1 and P2. A person skilled in the art should understand that FIG. 7 shows the ego vehicle, the vehicles A and B, and the pedestrians P1 and P2 around the ego vehicle only for example. In an actual scenario, there may be dozens or even dozens of vehicles around the ego vehicle, and there may be dozens or even dozens of pedestrians. Therefore, even in this seemingly "simple" T-shaped intersection scenario, a real-time high computing power requirement is raised for the autonomous driving system of the ego vehicle. The autonomous driving system of the ego vehicle usually fails to operate normally due to this high computing power requirement, resulting in stalling. As a result, the autonomous driving system of the ego vehicle cannot process a current case in real time and in a timely manner, and cannot plan a real-time and effective autonomous driving policy.

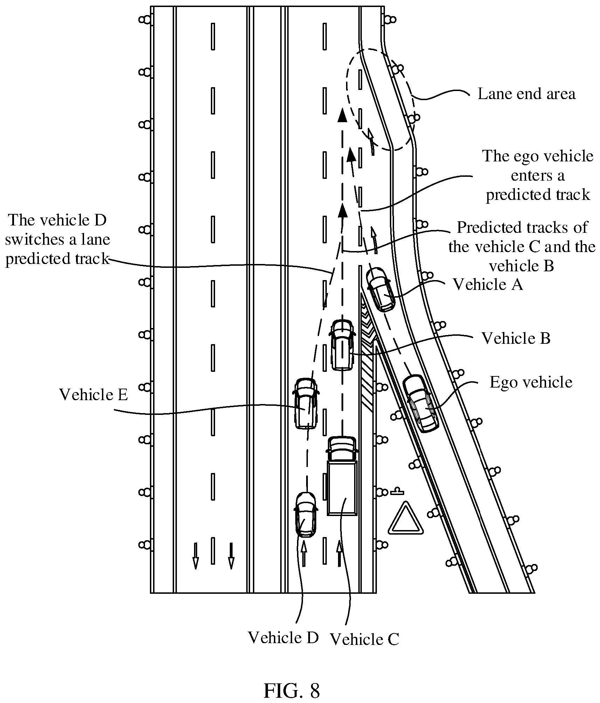

Even in a simpler scenario such as a high-speed or elevated lane scenario, there may still be a case in which the autonomous driving system cannot process current information in real time and in a timely manner. FIG. 8 is a schematic diagram of a scenario in which an ego vehicle enters a high-speed lane along a ramp. At a current moment, the ego vehicle is about to enter the high-speed lane along the ramp, a vehicle A with a same intention exists on the ramp in the front of the ego vehicle, and a vehicle B, a vehicle C, a vehicle D, and a vehicle E exist on the high-speed lane. Tasks that need to be completed by the autonomous driving system of the ego vehicle at the current moment includes: determining an area (namely, a road end area in FIG. 8) in which the ramp is to end, determining whether a predicted track of the ego vehicle conflicts with that of the vehicle A, and determining whether the predicted track of the ego vehicle conflicts with those of the vehicle B, the vehicle C, the vehicle D, and the vehicle E on the high-speed lane. In the scenario shown in FIG. 8, the vehicle B and the vehicle C continue to drive along the currently located lane, and the vehicle D plans to switch the lane because a speed of the vehicle E is slow. In other words, the vehicle D plans to enter the lane on which the vehicle B and the vehicle C are located. A behavior that the vehicle D plans to enter the lane on which the vehicle B and the vehicle C are located may affect the vehicle B and the vehicle C, that is, affect predicted tracks of the vehicle B and the vehicle C. Changes of the predicted tracks of the vehicle B and the vehicle C may further affect predicted tracks of the vehicle A and the ego vehicle. Therefore, the autonomous driving system of the ego vehicle needs to continuously re-plan a future driving policy and driving route, and a requirement of the autonomous driving system on computing power is high. It should be understood that, although FIG. 8 shows the vehicle A to the vehicle E other than the ego vehicle, this is merely an example. During a holiday peak time period (for example, the National Day holiday), there is usually a large-scale vehicle flow on the high-speed road. Mutual impact between vehicles of the vehicle flow makes the foregoing scenario more complex. Further, this scenario imposes a real-time high computing power requirement on the autonomous driving system of the ego vehicle. The autonomous driving system of the ego vehicle usually fails to operate normally due to this high computing power requirement, resulting in stalling. As a result, the autonomous driving system of the ego vehicle cannot process a current case in real time and in a timely manner, and cannot plan a real-time and effective autonomous driving policy.

It should be understood that, in the foregoing example, the ego vehicle may determine a lane end area by using a sensing system. The sensing system may include a camera apparatus and a lidar. The sensing system performs sensor information fusion based on image information obtained by using the camera apparatus and point cloud information obtained by using the lidar, to determine the lane end area, and plans a track of the ego vehicle in advance based on a distance and an orientation between the lane end area and the ego vehicle. It should be further understood that the ego vehicle may obtain a turning intention of the vehicle D based on turning light information of the vehicle D, or may obtain the turning intention by using the V2X (Vehicle to Everything)/V2V(Vehicle to vehicle) technology, or may determine, by using the autonomous driving system of the ego vehicle, the turning intention based on driving information of the vehicle D in a period of time before the current moment (for example, if the vehicle D has an overtaking behavior in a historical motion system within a sensing range of the sensing system of the ego vehicle, and always keeps a high motion speed, and a vehicle in the front of the vehicle D keeps a low speed at the current moment, the autonomous driving system of the ego vehicle may consider that the vehicle D has a strong overtaking intention, and predict a future predicted track of the vehicle D based on the strong overtaking intention), or may determine the turning intention based on a combination of the plurality of manners.

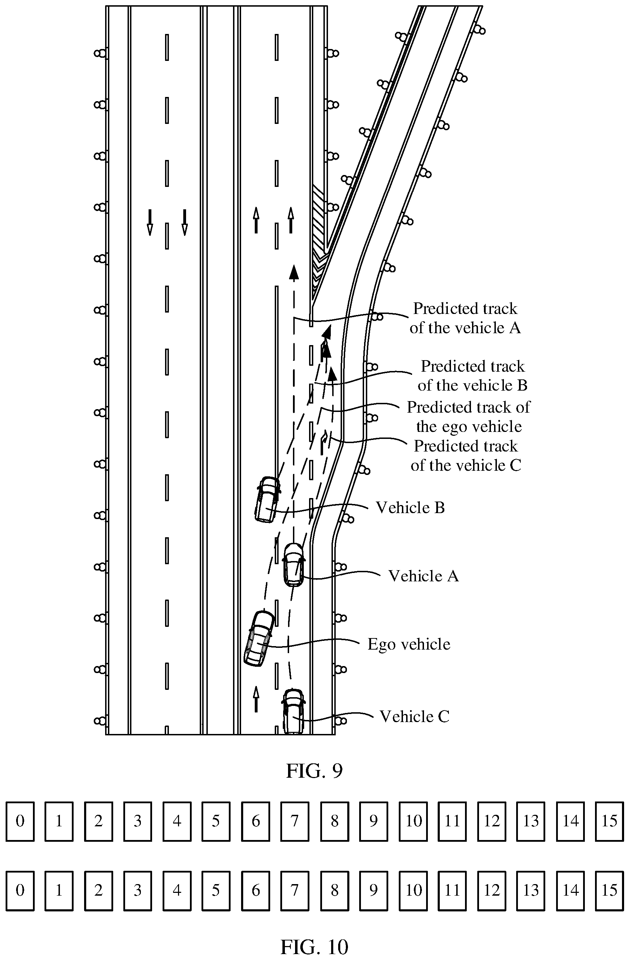

FIG. 9 is a schematic diagram of a scenario in which an ego vehicle is about to go down to a ramp from a high-speed lane. The ego vehicle plans to change a lane from a second lane on the right to the rightmost lane and go down to the ramp. On the rightmost lane, a vehicle A and a vehicle C are driving along the current lane. In the front of the lane on which the ego vehicle is located, a vehicle B plans to change to the rightmost lane and go down to the ramp. Because the vehicle B is located in the front of a moving direction of the vehicle A and the vehicle C, a behavior that the vehicle B changes the lane and go down to the ramp may affect the vehicle A and the vehicle C, and may further affect a future driving track of the ego vehicle. It should be understood that, although FIG. 9 shows the vehicle A to the vehicle C other than the ego vehicle, this is merely an example. During a holiday peak time period (for example, the National Day holiday), there is usually a large-scale vehicle flow on the high-speed road. Mutual impact between vehicles of the vehicle flow makes the foregoing scenario more complex. Further, this scenario imposes a real-time high computing power requirement on the autonomous driving system of the ego vehicle. The autonomous driving system of the ego vehicle usually fails to operate normally due to this high computing power requirement, resulting in stalling. As a result, the autonomous driving system of the ego vehicle cannot process a current case in real time and in a timely manner, and cannot plan a real-time and effective autonomous driving policy.

It can be learned from the foregoing various scenario examples that, in the field of autonomous driving, when the autonomous driving system of the ego vehicle is in some "complex and difficult" scenarios, high requirement impact on computing power of the autonomous driving system is generated due to comprehensive factors such as a large quantity and various types of surrounding targets (obstacles), a high requirement for tracking a target in real time, and a target motion status that may change at any time, and the autonomous driving system of the ego vehicle cannot process a current case in real time and in a timely manner due to the high requirement impact. Therefore, a real-time and effective autonomous driving policy cannot be planned. These scenarios include but are not limited to scenarios of turning left at a crossroad, turning left at a T-shaped intersection, leaving a roundabout, turning left at a Y-shaped intersection, entering a high-speed/elevated road through a ramp, going down from high-speed/elevated road to a ramp, and the like. In these scenarios, if traffic lights at an intersection are in a faulty state or a degraded state (for example, after 23:00, the traffic lights may be degraded to keep a blinking yellow state), or if some traffic participants do not comply with traffic rules, the foregoing problem may become more serious.

For the foregoing problem, this application provides a comprehensive solution. Main innovations of this application include: (1) fixedly matching tasks of the autonomous driving system to a processor core of the autonomous driving system based on different types; and (2) using an interaction game processing policy for an obstacle around the vehicle.

The following describes implementations of this application in detail.

When the autonomous driving system of the vehicle is run, different task types may be generally included, for example, an operating system task, an autonomous driving task, a data flushing task, a task of uploading data to a cloud, and a resource scheduling task. As shown in FIG. 2 and related descriptions, the autonomous driving task may be classified into a sensing task, a decision/planning task, and a control task.

Currently, each autonomous driving system generally includes a plurality of processors, and each processor may include a plurality of processor cores from a perspective of hardware that provides computing power in the autonomous driving system. FIG. 10 is a schematic diagram of a processor core of an autonomous driving system. The autonomous driving system includes two SOC chips A and B, and the chips A and B each includes 16 cores. Therefore, the autonomous driving system includes 32 processor cores in total.

In some embodiments, tasks of the autonomous driving system are fixedly allocated/matched to the 32 processors based on a type, and allocation may be performed based on the following priority: (1) the operating system task; (2) the autonomous driving task; (3) the data flushing (storage) task and the task of uploading data to the cloud; and (4) the resource scheduling task and a resource configuration task. More specifically, for example, processor cores 0 and 1 of the SOC A and the SOC B may be allocated to the operating system task; processor cores 2 to 13 of the SOC A and the SOC B may be allocated to the autonomous driving task; processor cores 14 of the SOC A and the SOC B may be allocated to the data flushing task and the task of uploading data to the cloud; and processor cores 15 of the SOC A and the SOC B may be allocated to the resource scheduling task and the resource configuration task.

A person skilled in the art should understand that the quantity and the fixed allocation mode of the processor cores are merely an example, and a person skilled in the art may change the quantity and the fixed allocation mode of processor cores within a suitable range. For example, the autonomous driving system may include three processors, and each processor includes 16 processor cores. For another example, three processor cores may be fixedly configured for the resource scheduling task and the resource configuration task.

That "a task of the autonomous driving system is fixedly allocated to a processor core of the autonomous driving system" means that, for the autonomous driving task, 24 processor cores (processor cores 2 to 13 of the SOC A and the SOC B) are allocated in total, and when the vehicle is in a driving process, all autonomous driving tasks (sensing, planning and control, and control) of the autonomous driving system of the vehicle are processed by the 24 processor cores. The autonomous driving tasks may not be processed by another processor core. In addition, another non-autonomous driving task (such as operating system or resource scheduling) is not processed by the 24 processor cores.

This is true for "fixed allocation" between another type of task and a processor core. That is, different types of tasks are fixedly processed by a specified processor core.

It can be learned that, in the foregoing setting, a largest quantity (24) of processor cores are allocated to the autonomous driving task. This setting can ensure that, in some scenarios, when there are a large quantity of targets (obstacles), a high computing power requirement of the autonomous driving system can be met. A person skilled in the art should understand that, when there are a large quantity of targets (obstacles), a requirement for a task of the autonomous driving system mainly comes from real-time dynamic tracking of a target obstacle and an autonomous driving policy planned based on real-time dynamic tracking of the target obstacle, that is, a main task in this case is a "sensing" part and a "planning" part of the autonomous driving task. Most of processor cores of the autonomous driving system are fixedly allocated to the autonomous driving task in advance, so that it can be ensured that even in the multi-target (obstacle) scenario, computing power provided by the 24 processor cores can meet the sensing task and the planning task in the autonomous driving task in the foregoing various scenarios. Therefore, a problem that an autonomous driving policy cannot be provided timely because the sensing task and the planning task cannot be processed timely is avoided.

In the foregoing setting, a small quantity of processors are fixedly allocated to a non-autonomous driving task, and these tasks include the operating system task, the data flushing task, and the like. It should be understood that, although a quantity of processor cores fixedly allocated to these tasks is less than a quantity of processor cores fixedly allocated to the autonomous driving task, the processor cores are still sufficient to process the foregoing tasks. It should be further understood that, in the foregoing various scenarios that have a high requirement on computing power, there is also a high requirement for these non-autonomous driving tasks. For example, when there are a large quantity of targets (obstacles) around the ego vehicle, an amount of data that needs to be stored also increases. However, processor cores are fixedly allocated to these non-autonomous driving tasks, so that a computing power requirement of these non-autonomous driving tasks may not extend out of the fixedly allocated processor cores and a computing power requirement of the autonomous driving task may not be affected.

In some embodiments, in addition to the sensing task and the planning task, the autonomous driving task further includes, for example, a GNSS (Global Navigation Satellite System) positioning task and a map (or high-definition map) service task. In the various scenarios with a high requirement on computing power, compared with that of the sensing task and the planning task, a real-time requirement of the positioning task and the map service task is low. Therefore, tasks included in the autonomous driving task may be prioritized, a priority of the sensing task and the planning task with the high real-time requirement is set to high, and a priority of the positioning task and the map service task is set to medium. When computing power allocation is performed on the autonomous driving task, a task with a high priority is preferentially met. This can ensure that, in a scenario with a high computing power requirement, for the autonomous driving task, a fixedly allocated processor core preferentially processes an "urgent" task (for example, the sensing task or the planning task), to ensure smooth execution of the autonomous driving task and safe driving of the vehicle.

In some embodiments, in the autonomous driving task, the sensing task and the planning task may be further split based on functions specifically implemented by the sensing task and the planning task. The sensing task may include, for example, LD (Lane Detection: lane line detection), PD (Pedestrian Detection: pedestrian detection), VD (Vehicle Detection: vehicle detection), and RL (Radar and LiDar: sensing and fusion). The planning task may include, for example, Router (global route planning) and FSM (Finite Status Machine: finite status machine), and MOP (motion planning: motion control). For the foregoing functions, processor cores may be further fixedly allocated. For example, two of the 24 processor cores may be fixedly allocated to the LD function, and one of the 24 processor cores may be fixedly allocated to the MOP function. It should be understood that, if there are too many specifically implemented functions and therefore that each specifically implemented function is fixedly allocated to at least one processor core cannot be met, the specifically implemented functions may be sorted based on priorities. A function with a high priority is fixedly allocated to a corresponding processor core, and a task with a low priority may not be fixedly allocated to a processor core.

It should be understood that the "high priority" or "low priority" task in the autonomous driving task may be preset, or may be manually set as required, or may be automatically adjusted based on an environment in which the vehicle is located. It should be further understood that the quantity of processor cores of the 24 processor cores fixedly allocated to the autonomous driving task is merely an example, and in practice, may be another quantity, for example, 36, 48, or another suitable natural number.

For example, an example in which 24 processor cores are fixedly allocated to the autonomous driving task is still used, this may be preset before the autonomous driving system is loaded to the vehicle, two processor cores are fixedly allocated to the VD (vehicle detection), and no processor core is fixedly allocated to the PD task.

For another example, a user setting interface may be set in the autonomous driving system, and a user may set one or two tasks to be fixedly allocated a processor core. For example, if the user considers that the RL task is important, one processor core may be fixedly allocated to the RL task.

For another example, in different vehicle running areas, an importance degree of a same task is also different. For example, in a high-speed road scenario, the PD (pedestrian detection) is not important (because there is generally no pedestrian on a high-speed road section). In an urban scenario, because there are a large quantity of pedestrians, the PD task is a basic and important task. Therefore, in the high-speed road scenario, a processor core may not be fixedly allocated to the PD task; and in the urban scenario, a processor core is fixedly allocated to the PD task.

The manners (preset, manual set, and automatic adjustment based on a scenario in which the vehicle is located) may also be mixed in use. For example, the autonomous driving system may be preset before loaded to the vehicle, and a function of performing automatic adjustment based on a scenario in which the vehicle is located is reserved.

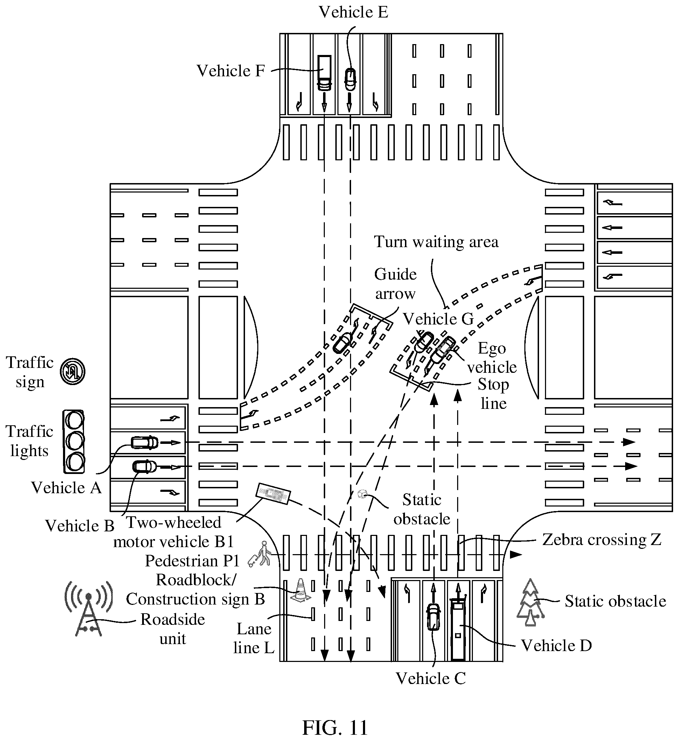

FIG. 11 shows an example of a case in a crossroad scenario. An ego vehicle intends to turn left and stop in a left-turn waiting area. In this scenario, targets (obstacles) that need to be sensed by a sensing system of the ego vehicle include:
a lane line;
a stop line;
a guide arrow;
traffic lights;
a traffic sign;
a zebra crossing;
vehicles around the ego vehicle (a vehicle A, a vehicle B, a vehicle C, a vehicle D, a vehicle E, a vehicle F, and a vehicle G, where the vehicles A to G is merely an example, and in an actual scenario, there may be dozens or even dozens of vehicles around the ego vehicle), where when there is a large vehicle (not shown in FIG. 8) around the ego vehicle, the large vehicle may further cause a sensing blind area for the ego vehicle, for example, shield a camera apparatus of the ego vehicle, and consequently, the ego vehicle cannot obtain a signal of the traffic lights;
a pedestrian P1 (the pedestrian P1 in FIG. 8 is merely an example, and in an actual scenario, a quantity of pedestrians around the ego vehicle may be dozens or even dozens of people);
a roadblock/construction sign;
a static obstacle (such as a tree) around a road;
a road side unit RSU (Road-Side Unit) around the road;
a static obstacle (such as a gravel and a pit) on the road; and
a two-wheeled motor vehicle.

It can be learned that, in the scenario shown in FIG. 11, the autonomous driving system needs to sense a large quantity and various types of targets. Therefore, in the scenario shown in FIG. 10 and a similar scenario, a requirement of a sensing task in the autonomous driving task of the autonomous driving system on computing power is high.

Further, for the planning task of the ego vehicle, autonomous driving policy planning needs to be performed on information based on the sensing system. Factors that need to be considered in policy planning include:
signal indications of the traffic lights and the traffic sign;
a possible conflict between a predicted track of the ego vehicle and a predicted track of another surrounding vehicle;
whether the ego vehicle is within a range specified by the lane line and the stop line;
the static obstacle and roadblock/construction sign that need to be avoid by the ego vehicle on the road;
information about a road side unit received by the ego vehicle;
a possible conflict between the predicted track of the ego vehicle and a predicted track of a pedestrian; and
a possible conflict between the predicted track of the ego vehicle and a predicted track of another motor vehicle (for example, the two-wheeled motor vehicle) on the road.

It can be learned that in the scenario shown in FIG. 11, a planning system of the autonomous driving system also needs to process a large amount of information to make a corresponding autonomous driving policy. For example, when planning a route, the planning system of the ego vehicle needs to avoid the static obstacle and roadblock/construction sign; needs to avoid a collision with the surrounding pedestrian and two-wheeled motor vehicle; and needs to avoid conflicts with tracks of other surrounding vehicles A to G. Particularly, in an actual urban working condition, there may be dozens of vehicles and dozens of pedestrians around the ego vehicle, and therefore, a computing power requirement of the autonomous driving task that needs to be processed by the ego vehicle may reach a peak state.

However, in some cases, if the traffic lights in FIG. 11 fail or are degraded, a computing power requirement of the autonomous driving task may further increase.

In some embodiments, the foregoing policy in which processor cores are fixedly allocated is used, an example in which the 24 processor cores are allocated to the autonomous driving task is still used, and processor cores may be further allocated to the VD task and the PD task, to ensure that a computing power requirement of the autonomous driving system of the ego vehicle can be met for tasks of vehicle detection around a pedestrian and pedestrian detection. In addition, processor cores may be fixedly allocated to the Router task and the MOP task, to ensure that a computing power requirement of the route planning task and the motion control task of the ego vehicle can be met. Through this setting, it can be ensured that an autonomous driving task may be completed instantly and smoothly in such scenario in which a computing power requirement reaches a peak.

In some embodiments, after the policy in which processor cores are fixedly allocated is performed, a key target around the ego vehicle may be selected, and the autonomous driving system sets a sensing task and related planning task of the key target as tasks with high priorities. A key target selection policy may be determined based on whether a road traffic participant is mighty or vulnerable. For example, if a collision between a vehicle and a pedestrian may cause serious human injury, for example, the pedestrian P1 in FIG. 11 may be used as a key target, the autonomous driving system tracks and predicts a track of the pedestrian P1 at a high priority, and performs corresponding ego vehicle track planning.

In some embodiments, in consideration of a case in which the traffic participant is mighty or vulnerable, a non-motor vehicle (for example, a bicycle) on a road may be further used as a key target, and the autonomous driving system tracks and predicts a track of the non-motor vehicle at a high priority, and performs corresponding ego vehicle track planning.

In some embodiments, for key target selection, a party that is prone to an accident in traffic participants may be included. For example, in current social and economic lives, express delivery is a common work type. In a city, a large quantity of people are engaged in catering express delivery, a person engaged in catering express delivery usually uses a two-wheeled (motor or electric) vehicle as a meal delivery tool, and is prone to a traffic accident. Therefore, in key target selection, the two-wheeled vehicle on the road may be used as a key target, for example, a two-wheeled motor vehicle in FIG. 11. The autonomous driving system tracks and predicts a track of a two-wheeled motor vehicle B1 at a high priority, and performs corresponding ego vehicle track planning, to avoid a traffic accident.

In some embodiments, it is considered that not all two-wheeled vehicles on the road are driven by meal delivery persons, and a current meal delivery person usually wears a uniform of a bright color (for example, blue or yellow), the sensing system of the autonomous driving system may be pre-trained. Specifically, if the sensing system uses a neural network (for example, a convolutional neural network) to process obtained image information, the neural network is pre-trained by using an image including a meal delivery person wearing a uniform. After training is completed (that is, accuracy of identifying the meal delivery person by the neural network of the sensing system exceeds a preset value), the sensing system may be used on the vehicle to identify the meal delivery person, and the meal delivery person is used as a key target, to avoid a traffic accident with the meal delivery person. In some embodiments, for example, a ResNet-50 may be used as a neural network used by the sensing system. It should be understood that another type of neural network (for example, a VGG) may alternatively be used as a neural network used by the sensing system, provided that the neural network is used within the spirit disclosed in this application.

In some embodiments, it is further considered that the meal delivery person may usually run a red light or drive a wrong way. After using the meal delivery person as the key target, the autonomous driving system continuously performs target track on and predicts a track of the meal delivery person in real time, and the autonomous driving system plans an ego vehicle track that avoids a collision with the meal delivery person.

In some embodiments, after determining each key target, the ego vehicle may further highlight/highlight/emphasize the key target on a central control screen, to remind a driver of the ego vehicle to pay attention to the key target around the ego vehicle.

In some embodiments, when a risk of a collision between the ego vehicle and each key target exceeds a specified threshold, the driver is reminded to take over the ego vehicle. The driver may be reminded in an acoustic, optical, or combined manner.

A key target is selected from road traffic participants, and the sensing system of the autonomous driving system is pre-trained. In the various complex traffic scenarios, the ego vehicle can avoid causing personal injury due to a collision with a VRU (Vulnerable Road User: vulnerable road user) as much as possible. On the other side, the ego vehicle can further avoid a collision with a road traffic participant (for example, the meal delivery person) that is prone to a traffic accident as much as possible. Therefore, the ego vehicle has high autonomous safety in a complex urban road environment.

It should be understood that the key target selection and the corresponding ego vehicle route planning are based on a premise that the processor cores is fixedly allocated to the autonomous driving task disclosed in this application. In a real scenario, there may be dozens of or even hundreds of pedestrians or non-motor vehicles on the road, and the sensing task for the key target and the corresponding planning task may be assigned high task priorities. In some embodiments, a processor core may be fixedly allocated to a sensing or planning task for the key target, to ensure autonomous driving safety of the vehicle in the complex scenario to a maximum extent.

In some embodiments, a capability of the sensing system of the ego vehicle may be affected by a surrounding large obstacle. For example, the camera apparatus of the ego vehicle may be shielded by a large vehicle (for example, a bus or a truck) in front of the ego vehicle, and consequently, a signal of the traffic lights at a front intersection cannot be obtained. In this case, the ego vehicle may obtain the signal of the front traffic lights in real time by interacting with the road side unit and based on information exchange between the road side unit and the traffic lights.

In some embodiments, when the ego vehicle is in various complex and difficult scenarios, the autonomous driving system may detect the traffic lights in these scenarios. If the autonomous driving system determines that the traffic lights in the current scenario are in a state of non-working or degraded working (for example, only the blinking yellow light is displayed), the autonomous driving system limits a speed of the ego vehicle, for example, limits the vehicle speed to less than 40 km/h. When the traffic lights are in the state of non-working or degraded working, in the complex scenarios, the traffic lights provide a small amount of information or even zero. Therefore, it is difficult to form complete indications for all traffic participants, and a traffic accident is easily caused. However, the speed of the ego vehicle is limited when the traffic lights are in the state of non-working or degraded working, so that the ego vehicle drives at a low speed in this scenario, to reduce a possibility of a traffic accident.

It should be understood that the autonomous driving system may determine, in a plurality of manners, that the traffic lights in the current scenario are in the state of non-working or degraded working. For example, the ego vehicle may communicate with the road side unit, the road side unit keeps communication with the traffic lights, and the road side unit sends a state of the traffic lights to the ego vehicle. Alternatively, the sensing system of the autonomous driving system may include the neural network (for example, the convolutional neural network), and the neural network is pre-trained, so that the neural network can identify the state of non-working or degraded working of the traffic lights, and determine whether the traffic lights work based on a trained neural network.

Speed limiting on the ego vehicle is still based on a fact that processor cores are fixedly allocated to the autonomous driving task. In further consideration, the speed limiting on the ego vehicle further helps the autonomous driving system have sufficient time to process and plan the obtained information. Because a lower vehicle speed means that more time is required to pass through a same distance, the speed limiting on the ego vehicle may enable the autonomous driving system to have more time to process information and make decision in the difficult scenario (complex traffic road condition and failure/degrade of the traffic lights).

In some embodiments, in further consideration of the obstacle around the ego vehicle, the autonomous driving system uses an interaction game policy when sensing, tracking, and making corresponding planning on the surrounding obstacle. Specifically, first, a type and motion status information of an obstacle around the ego vehicle need to be accurately identified, and an intention of the obstacle is understood based on a historical motion status and road topology information of the obstacle, to predict a possible behavior track of the obstacle to achieve an intended target of the obstacle. In obstacle interaction decision, possible interaction behavior track space of the obstacle and the ego vehicle is assessed based on a possible behavior track of the obstacle in different intentions and behavior track space of the ego vehicle, to make interaction decision.

It should be understood that the interaction game policy used by the autonomous driving system is also based on the fact that processor cores are fixedly allocated to the autonomous driving task in this application. Through the setting, when the ego vehicle is in each complex scenario and there are a large quantity of surrounding dynamic obstacles, the autonomous driving system has sufficient computing power to process the sensing task and the planning task for the surrounding dynamic obstacles in a timely manner.

The following describes an interaction game process between the ego vehicle and a surrounding dynamic obstacle.

First, the autonomous driving system determines a part that is of dynamic obstacles around the ego vehicle and that belongs to a game target and a part that belongs to a non-game target. If a future motion track of the ego vehicle conflicts with a future motion track of a dynamic obstacle, the dynamic obstacle is determined as a game target; otherwise, the dynamic obstacle is determined as a non-game target.

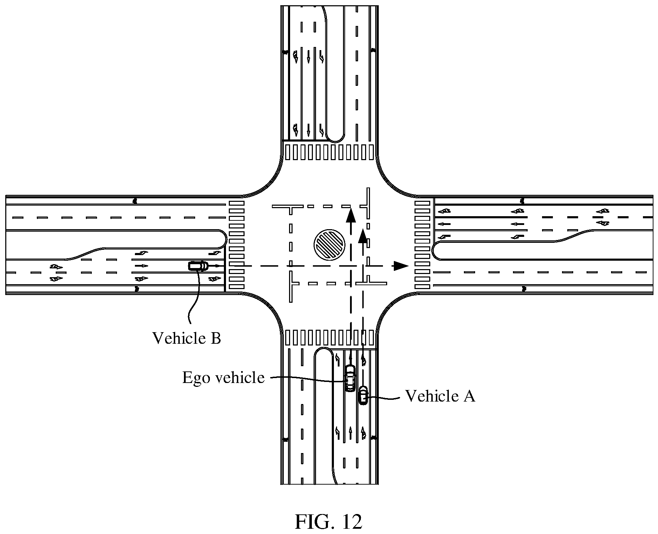

As shown in FIG. 12, it is assumed that the motion track of the ego vehicle is straight-through. The autonomous driving system of the ego vehicle determines, based on obtained sensing information, that there are two targets (or referred to as obstacles) in a current range: a vehicle A and a vehicle B, and the vehicle A and the vehicle B are in a motion state. The autonomous driving system may generate a predicted track of the vehicle A and a predicted track of the vehicle B based on the road topology and the motion statuses of the targets. The predicted track of the vehicle B conflicts with the motion track of the ego vehicle, the vehicle A is in a straight-through state in a same direction as the ego vehicle, and the predicted track of the vehicle A does not conflict with the motion track of the ego vehicle. Therefore, the autonomous driving system determines the vehicle B as a game target, that is, the ego vehicle may play a game with the vehicle B in a motion process in a subsequent time period at a current moment, and subsequent motion decision of the ego vehicle needs to be made in consideration of the predicted track of the vehicle B.

In a process in which the ego vehicle plays a game with the game target, a sensing module of the autonomous driving system continuously observes a motion status of the game target, including a horizontal status feature and a vertical status feature, and records key information. The sensing module sends the information to a planning module, and the planning module generates a decision solution set based on the obtained information.

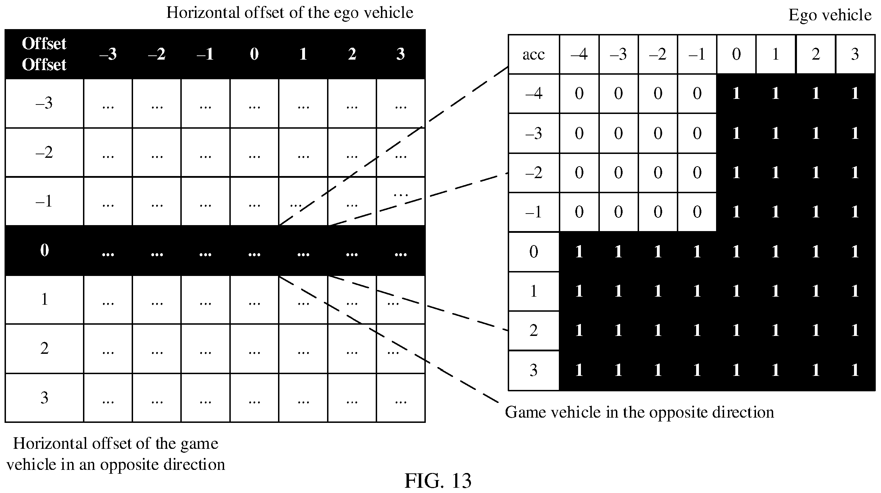

In some embodiments, as shown in FIG. 13, the planning module may generate a longitudinal acceleration sampling dimension based on the obtained sensing information and in consideration of longitudinal feature information such as a road speed limit, an acceleration change Jerk value, and a game target type, and generate a horizontal offset sampling dimension in consideration of feature information such as a road boundary, a static obstacle, and the vehicle kinematics. The planning module combines the horizontal position offset sampling dimension and the longitudinal acceleration sampling dimension to span sampling space, where the spanned sampling space is possible space of all policies. The planning module may obtain a set of all decision solutions based on the spanned sampling space.

The planning module may divide the decision solution set into at least one decision solution subset based on a category of an action pair of the ego vehicle and the game target included in each decision solution in the decision solution set. That is, the planning module may mark a decision label for all action pairs of the ego vehicle and the game target in the decision solution set, and group a cluster with a consistent label into a decision solution subset, where each decision solution subset includes at least one decision solution.

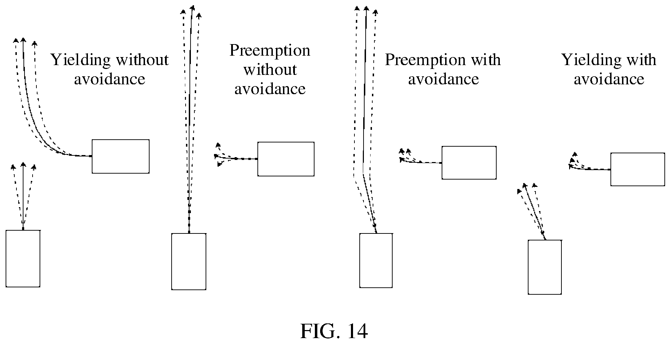

As shown in FIG. 14, in some embodiments, the planning module marks a decision label for each decision solution in the decision solution set. For example, in a scenario in an embodiment shown in FIG. 14, after the decision label is marked for each decision solution in the decision solution set, the decision label in the decision solution set may include, for example, yielding without avoidance, preemption without avoidance, preemption with avoidance, and yielding with avoidance. Each label represents a decision type of the ego vehicle for the game target. For example, for the decision of "yielding without avoidance", it indicates that the ego vehicle yields through speeding down in a subsequent game process, but does not significantly change a movement direction of the ego vehicle (without avoidance). For another example, for the decision of "preemption with avoidance", it indicates that the ego vehicle preempts through speeding up or not speeding down in a subsequent game process, but in a preemption process, the ego vehicle significantly changes a driving direction of the ego vehicle, to avoid the game target.

In some embodiments, a decision type represented by each decision label may be quantitatively assessed. Specifically, a benefit evaluation system provided in this embodiment of this application for calculating a benefit corresponding to a decision solution may include several decision dimensions such as safety, comfort, passability, a right of way, an offset, and a historical decision result of the decision solution.

In some embodiments, the decision benefit in the benefit evaluation system may be determined based on a decision cost (cost). A smaller cost indicates a higher decision benefit and a higher possibility that the decision solution is used as an optimal decision solution. Specific evaluation dimensions and explanations of the decision cost are as follows.
(1) Safety cost: The safety cost in this embodiment of this application is mainly a decision cost obtained based on a distance between the ego vehicle and the game target in a process of derivation of the motion track of the ego vehicle and the motion track of the game target.

A smaller distance between the ego vehicle and the game target indicates lower safety. That is, a smaller distance between the ego vehicle and the game target indicates a larger safety cost of the ego vehicle and a smaller safety-based decision benefit of the ego vehicle.

Further, in this embodiment of this application, a minimum distance between the ego vehicle and the game target may be further set. In a process in which the distance between the ego vehicle and the game target gradually approaches the minimum distance, the safety cost gradually increases, and the security-based decision benefit gradually decreases. When the distance between the ego vehicle and the game target is not greater than the minimum distance, the security cost is maximized, and the security-based decision benefit is minimized.

In addition, in this embodiment of this application, a maximum distance that is between the ego vehicle and the game target and that is used to calculate the safety cost may be further set. When the distance between the ego vehicle and the game target is not less than the maximum distance, the safety cost is minimized, and the safety-based decision benefit is maximized.

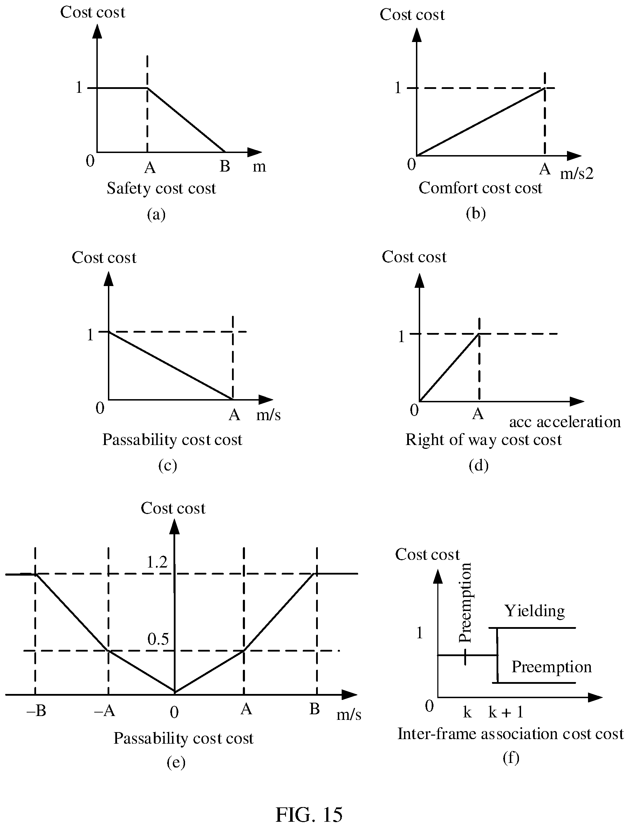

In some embodiments, as shown in (a) in FIG. 15, a horizontal axis represents the distance between the ego vehicle and the game target, a point A in the horizontal axis represents a minimum distance set between the ego vehicle and the game target in this embodiment of this application, a point B in the horizontal axis may represent a maximum distance that is set between the ego vehicle and the game target in this embodiment of this application and that is used to calculate the security cost, and a longitudinal axis represents the security cost.

When the distance between the ego vehicle and the game target is not less than B, the security cost is minimized, and the security-based decision benefit is maximized. When the distance between the ego vehicle and the game target is between the point A and the point B, the closer the distance between the ego vehicle and the game target is to the point A, the greater the security cost is, and the smaller the security-based decision benefit is; and the closer the distance between the ego vehicle and the game target is to the point B, the smaller the security cost is, and the larger the security-based decision benefit is. When the distance between the ego vehicle and the game target is not greater than A, the security cost is maximized, and the security-based decision benefit is minimized.

The point A and the point B shown in (a) in FIG. 15 in this embodiment of this application may be obtained based on actual experience. For example, in this embodiment of this application, the point A shown in (a) in FIG. 15 may be 0.2 m to 0.5 m (for example, the point A is 0.5 m), and the point B may be 1.0 m to 3.0 m (for example, the point B is 2.5 m).

(2) Comfort cost: The comfort cost in this embodiment of this application is mainly a decision cost obtained based on a difference between a current acceleration and an expected acceleration of the ego vehicle.

A smaller difference between the current acceleration and the expected acceleration of the ego vehicle indicates a smaller comfort cost and a larger comfort-based decision benefit of the ego vehicle.

Further, in this embodiment of this application, a maximum difference between the current acceleration and the expected acceleration of the ego vehicle may be further set. When the difference between the current acceleration and the expected acceleration of the ego vehicle is closer to the maximum difference, the comfort cost is larger, and the comfort-based decision benefit is smaller.

In some embodiments, as shown in (b) in FIG. 9-4, a horizontal axis represents the difference between the current acceleration and the expected acceleration of the ego vehicle. For example, if the current acceleration of the ego vehicle is 1 m/S^2, and the expected acceleration is 4 m/S^2, the difference between the current acceleration and the expected acceleration of the ego vehicle is 3 m/S^2. A point A in the horizontal axis represents a maximum difference between the current acceleration and the expected acceleration of the ego vehicle set in this embodiment of this application.

When the difference between the current acceleration and the expected acceleration of the ego vehicle is closer to the point A, the comfort cost is larger, and the comfort-based decision benefit is smaller. When the difference between the current acceleration and the expected acceleration of the ego vehicle is farther from the point A, the comfort cost is smaller, and the comfort-based decision benefit is larger. When the difference between the current acceleration and the expected acceleration of the ego vehicle is not less than an acceleration value corresponding to the point A, the comfort cost is maximized, and the comfort-based decision benefit is minimized.

The point A shown in (b) in FIG. 15 in this embodiment of this application may be obtained based on actual experience.

For example, in this embodiment of this application, the point A shown in (b) in FIG. 15 may be 5 m/S^2 to 7 m/S^2 (for example, the point A is 6 m/S^2).

(3) Passability cost: The passability cost in this embodiment of this application is mainly a decision cost obtained based on a speed difference between a current speed of the ego vehicle and a speed at which the ego vehicle arrives at a conflict point (for example, a point at which the track of the ego vehicle may interact with the track of the game target).

A larger speed difference (the current speed minus the speed at a conflict point) indicates a larger passability cost and a smaller passability-based decision benefit of the ego vehicle.

Further, in this embodiment of this application, a maximum value of the speed difference may be further set. When the speed difference is closer to the maximum value, the passability cost is larger, and a passability-based decision benefit is smaller.

In some embodiments, as shown in (c) in FIG. 15, a horizontal axis represents the speed difference, and a point A in the horizontal axis represents the maximum value of the speed difference set in this embodiment of this application. When the speed difference is closer to the point A, the passability cost is larger, and the passability-based decision benefit is smaller. When the speed difference is farther away from the point A, the passability cost is smaller, and the passability-based decision benefit is larger. When the speed difference is not less than the speed difference corresponding to the point A, the passability cost is maximized, and the passability-based decision benefit is minimized.

The point A shown in (c) in FIG. 15 in this embodiment of this application may be obtained based on actual experience.

For example, in this embodiment of this application, the point A shown in (c) in FIG. 15 may be 6 m/s to 10 m/s (for example, the point A is 7 m/s).

(4) Right of way cost: The right of way cost in this embodiment of this application is a decision cost obtained based on a current acceleration of the ego vehicle based on a right of way status of the ego vehicle or the game target.

In this embodiment of this application, calculation is mainly performed based on a party with a high right of way, and right of way cost punishment is imposed on the party with a right of way. For example, if the ego vehicle has a high right of way, right of way cost punishment is performed if the ego vehicle speeds down.

It may be understood that the right of way in this embodiment of this application is a relative relationship between the ego vehicle and the game target. When the right of way of the ego vehicle is higher than the right of way of the game target, because the right of way of the ego vehicle is higher, the vehicle with a higher right of way should change a motion status as little as possible in an interaction game process. Therefore, if the acceleration of the ego vehicle decreases and the ego vehicle speeds down, a high right of way cost punishment should be imposed on the ego vehicle due to the change of the motion state of the ego vehicle. That is, when the right of way of the ego vehicle is higher than the right of way of the game target, a smaller current acceleration of the ego vehicle indicates a larger right of way cost and a smaller right of way-based decision benefit of the ego vehicle.

Further, in this embodiment of this application, a minimum value of the current acceleration of the ego vehicle may be further set. When the current acceleration of the ego vehicle is closer to the minimum value, the right of way cost is larger, and the right of way-based decision benefit is smaller.

In some embodiments, as shown in (d) in FIG. 15, ACC represents an acceleration, and a high right of way of the ego vehicle is a limited premise. For example, the high right of way of the ego vehicle is used as a premise to input, and the right of way cost is further determined based on a current right of way relationship between the ego vehicle and the game target.

A horizontal axis represents a current acceleration of the ego vehicle, and a point A in the horizontal axis represents a minimum difference value of the current acceleration of the ego vehicle set in this embodiment of this application. When the current acceleration of the ego vehicle is closer to the point A, the right of way cost is larger, and the right of way-based decision benefit is smaller. When the current acceleration of the ego vehicle is farther away from the point A, the right of way cost is smaller, and the right of way-based decision benefit is larger. When the current acceleration of the ego vehicle is not greater than an acceleration value corresponding to the point A, the right of way cost is maximized, and the right of way-based decision benefit is minimized.

The point A shown in (d) in FIG. 15 in this embodiment of this application may be obtained based on actual experience.

For example, in this embodiment of this application, the point A shown in (d) in FIG. 15 may be (-1) m/S^2 to (-3) m/S^2 (for example, the point A is (-1) m/S^2).

(5) Offset cost: The offset cost in this embodiment of this application is mainly a decision cost obtained based on a position offset of the ego vehicle relative to a reference line. It may be understood that a longer offset distance of the ego vehicle relative to the reference line indicates a larger offset cost and a smaller offset-based decision benefit of the ego vehicle.

Optionally, the reference line in this embodiment of this application may be a center line of a road on which the vehicle is located.

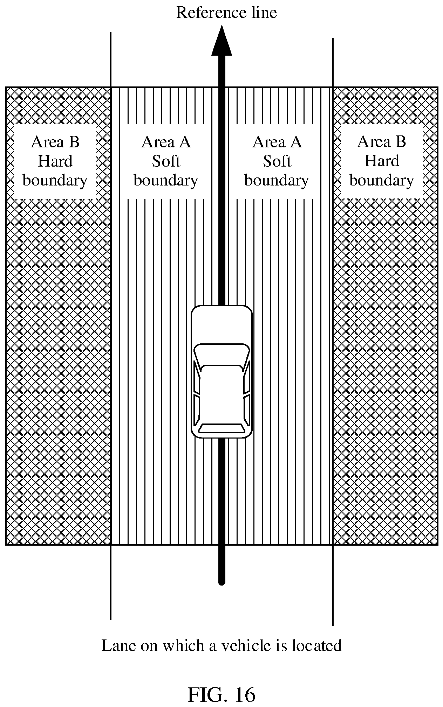

Further, as shown in FIG. 16, this embodiment of this application may include two offset areas, for example, an area A and an area B. In this embodiment of this application, the area A may be referred to as a soft boundary, and the area B may be referred to as a hard boundary. The soft boundary may be an area of a driving lane on which the vehicle is located. In other words, if the ego vehicle offsets relative to the reference line, but the ego vehicle keeps driving on the driving lane, it may be understood that the ego vehicle is always in the soft boundary. The hard boundary set in this embodiment of this application may be an area beyond the driving lane. In other words, if the ego vehicle offsets relative to the reference line, and the ego vehicle moves away from the driving lane, it may be understood that the ego vehicle enters the hard boundary.

In addition, when the vehicle moves away from the driving lane, an offset between the vehicle and the reference line is greater, there are a large quantity of risk factors in a driving process, and safety is low. Therefore, in this embodiment of this application, a punishment cost may be increased when the vehicle moves away from the driving lane, namely, when the vehicle is in the hard boundary. For example, in this embodiment of this application, different slopes for calculating the offset cost may be used for calculation based on different areas. A slope that is set in the soft boundary and that is used to calculate the offset cost may be small, and a slope that is set in the hard boundary and that is used to calculate the offset cost may be large.

In some embodiments, as shown in (e) in FIG. 15, a horizontal axis represents a current offset distance between the ego vehicle and the reference line, a point -A in the horizontal axis represents a leftmost position of the soft boundary set in this embodiment of this application, a point 0 represents a position of the reference line, a point A represents a rightmost position of the soft boundary set in this embodiment of this application, the point -B represents a leftmost position of the hard boundary set in this embodiment of this application, and the point B represents a rightmost position of the hard boundary set in this embodiment of this application. The offset cost of the vehicle relative to the reference line in the soft boundary is calculated by using a slope 1, the offset cost of the vehicle relative to the reference line in the hard boundary is calculated by using a slope 2, and the slope 2 is greater than the slope 1.

When the offset distance between the ego vehicle and the point 0 of the reference line is larger, the offset cost is larger, and the offset-based decision benefit is smaller. When the offset distance between the ego vehicle and the point 0 of the reference line is not less than a distance corresponding to the point C, the offset cost is maximized, and an offset-based decision benefit is minimized.

The point A, the point B, the slope 1, and the slope 2 shown in (e) in FIG. 9-4 in this embodiment of this application may be obtained based on actual experience.

For example, in this embodiment of this application, the point A shown in (e) inFIG. 9-4may be 1.5 m to 2.5 m (for example, if the point A is 2 m, the corresponding point -A is -2 m), and the point B may be 1.9 m to 2.9 m (for example, if the point B is 2.9 m, the corresponding point -B is -2.9 m).

(6) Historical decision result cost: The historical decision result cost in this embodiment of this application may also be referred to as an inter-frame association cost cost, and is mainly a decision cost that is based on a current frame and that is obtained based on a decision solution of a last frame of the ego vehicle.

It may be understood that, for a same game target, it is assumed that the last frame of the ego vehicle is preemption and a next frame of the ego vehicle is yielding, a speed change of the ego vehicle is large, resulting in large driving fluctuation and reduced comfort. Therefore, to effectively ensure that the driving fluctuation is small, the fluctuation is alleviated, and driving is more stable, if driving is in a preemption state before, the driving is always in the preemption state as long as possible.

In some embodiments, as shown in (f) in FIG. 15, if a K^{th} frame is preemption, and a (K + 1)^{th} frame is still preemption, a historical decision result cost is small, and a historical decision result-based decision benefit is large. On the contrary, if the K^{th} frame is preemption, and the (K + 1)^{th} frame is yielding, the historical decision result cost is large, and the historical decision result-based decision benefit is small.

Further, the electronic apparatus in this embodiment of this application may perform fusion on costs of the evaluation dimensions based on a specific weight proportion, to obtain a decision cost based on multi-dimensions.

In some embodiments, the benefit evaluation system may be mainly determined based on the historical decision result, that is, mainly based on the historical decision result (for example, a weight of the historical decision result cost is set to 80% to 90%), and a driving style of the vehicle may be determined based on the historical decision result, for example, conservative, moderate, or radical.

In some embodiments, in this embodiment of this application, a weight corresponding to each evaluation dimension in the benefit evaluation system is set as follows:
safety: 10000; passability: 6000; comfort: 500; right of way: 1000; offset: 2000; and risk area: 1000.

Therefore, the decision cost obtained in this embodiment of this application may be:
safety cost x 10000 + passability cost x 6000 + comfort cost x 500 + right of way cost x 1000 + offset cost x 2000 + risk area cost x 1000.

Further, for different driving environments, the weight corresponding to each evaluation dimension in the benefit evaluation system may be different.

In some embodiments, a correspondence between the driving environment and an evaluation dimension weight may be shown in Table 1.

**Table 1: Correspondence between the driving environment and the evaluation dimension weight**

| Driving environment | Evaluation dimension weight |
|---|---|
| Rugged mountain road | Safety cost x 10000, passability cost x 6000, comfort cost x 500, right of way cost x 3000, offset cost x 500, and risk area cost x 2000 |
| Urban road | Safety cost x 10000 + passability cost x 6000 + comfort cost x 500 + right of way cost x 1000 + offset cost x 2000 + risk area cost x 1000 |

When the current driving environment of the vehicle is an urban road, a policy feasibility area generation module may determine, based on content in Table 1, that weights corresponding to evaluation dimensions in the used benefit evaluation system are safety cost x 10000, passability cost x 6000, comfort cost x 500, right of way cost x 1000, offset cost x 2000, and risk area cost x 1000.

Based on the cost evaluation system, a decision benefit value of the ego vehicle may be obtained.

It should be understood that the decision benefit value may be normalized, that is, an ideal optimal benefit is 1, and a benefit of each policy is normalized based on a proportion of each other.

Still as shown in FIG. 14, in the decision solutions in FIG. 9-3, tracks of the ego vehicle and the game target corresponding to different specific decision solutions are shown by using dashed lines and solid lines. The "yielding without avoidance" is used as an example, in this decision solution, the ego vehicle and the game target each have three corresponding tracks, and the three tracks correspond to different decision benefit values. A track identified by a solid line of the ego vehicle represents a maximum decision benefit value of the ego vehicle in the three corresponding tracks (that is, in current policy evaluation of the yielding without avoidance, the ego vehicle drives in this planned track is the most favorable). Correspondingly, a track identified by a solid line of the game target represents a predicted track of the game target corresponding to a solid line track of the ego vehicle. The solid line track of the ego vehicle is referred to as a target decision solution in the decision solution subset of the "yielding without avoidance". Similarly, a target decision solution of another decision solution subset may be determined.

It should be understood that although FIG. 14 shows three track pairs (the ego vehicle and the game target) for the "yielding without avoidance", a quantity of track pairs may alternatively be another natural number, for example, four track pairs, or two track pairs.

The target decision solution in each decision solution subset may be determined through the setting.

In some embodiments, the target decision solution of the decision solution subset is further assessed, so that the decision solution subset may be divided into different echelons. FIG. 14 is still used as an example, and four decision solution subsets are shown: yielding without avoidance, preemption without avoidance, preemption with avoidance, and yielding with avoidance. Each decision solution subset has a target decision solution. Decision benefit values of the target decision solutions of the four different decision solution subsets are compared, the four different decision solution subsets may be divided into different "echelons" based on a specified threshold. For example, the four target decision solutions are still used as an example. It is assumed that the threshold is set to 0.76 (the threshold may be obtained based on an empirical value or a historical value), if decision benefits of the preemption with avoidance and the yielding without avoidance are 0.8 and 0.77 respectively, both of them are greater than the threshold; and if decision benefits of the yielding without avoidance and the yielding with avoidance are 0.73 and 0.69 respectively, both of them are less than the specified threshold. The decision solution of the preemption with avoidance and the yielding without avoidance can be considered as a first echelon, and the decision solution of the preemption without avoidance and the yielding with avoidance can be considered as a second echelon. Back to the physical world, compared with the second echelon, the first echelon represents a better "policy". In other words, in the scenario shown in FIG. 14 (which may be a scenario in which the ego vehicle goes straight and another vehicle enters the lane on which the ego vehicle is located from a gap), it is preferable for the ego vehicle to select the policy of the preemption with avoidance or the yielding without avoidance. If the policy is understood from a perspective of a real physical world, for the scenario shown in FIG. 14, if the ego vehicle chooses the preemption with avoidance, good passability of the ego vehicle can be ensured, and a basic traffic rule that turning yields to straight-through is met. In addition, the ego vehicle slightly performs horizontal avoidance to meet a safety requirement (to prevent a collision caused by entering of another vehicle at an excessively high speed). Therefore, the policy can meet a requirement of the ego vehicle for smooth passing and ensure driving safety. In general, this is a "very good" policy. If the ego vehicle chooses the yielding without avoidance, driving safety can be ensured. In addition, the ego vehicle does not need to perform horizontal avoidance. This policy ensures safety and is also a "very good" policy in general. However, for the policy of the preemption without avoidance, although smooth passing of the ego vehicle can be ensured, because there is no avoidance action in a horizontal direction, there is a high probability that the straight-through ego vehicle collides with another vehicle that enters the lane on which the ego vehicle is located. As a result, safety of the policy is low, and safety is a first requirement for vehicle driving. Therefore, the policy is not a preferred solution. However, for the policy of the yielding with avoidance, since the ego vehicle chooses to yield, the avoidance is a redundant action. Therefore, the policy is not a preferred solution. Therefore, in consideration of the target decision solutions of the four decision solution subsets, the preemption with avoidance and the yielding without avoidance are preferred solutions, and therefore are used as a policy solution set of the first echelon. The preemption without avoidance and the yielding with avoidance are not preferred solutions, and therefore are used as a policy solution set of the second echelon. The judgment criteria of the "preferred solution" and "non-preferred solution" are determined by comparing the decision benefit with the specified threshold.

It should be understood that the policy sets of the first echelon and the second echelon are for a current status of the ego vehicle. As a state of the ego vehicle and the game target changes, a benefit score and a corresponding priority of each policy may change at any time.

Still with reference to the scenario and the related policies shown in FIG. 14, after the target decision solution set of the first echelon and the target decision solution set of the second echelon are distinguished, the planning module further determines a decision benefit difference between the target decision solutions of the first echelon. When the difference between decision benefits is less than a specified threshold, it is considered that there is no optimal solution between the target decision solution sets of the first echelon. For example, the first echelon includes two target decision solutions: the preemption with yielding and the yielding without avoidance, and the decision benefits of the two target decision solutions are 0.8 and 0.77 respectively. If a specified threshold is 0.1, a decision benefit difference (0.03) between the two target decision solutions (the preemption with yielding and the yielding without avoidance) is less than the set threshold. The planning module considers that there is no obvious good or bad between the two target decision solutions at a current moment, and the ego vehicle may use any solution. In this case, it may be understood that an interaction relationship between the ego vehicle and the game target is unclear, and the first interaction phase needs to be entered. In the first interaction phase, a possibility that the ego vehicle and the game target jump between a plurality of corresponding different decision solutions is reserved.

Further, when the planning module determines that the interaction between the ego vehicle and the game target meets a condition for entering a second interaction phase, the interaction enters the second interaction phase from the first interaction phase. In this case, the interaction relationship between the ego vehicle and the game target is clear.

The planning module may determine, based on the following condition, whether the ego vehicle enters the second interaction phase from the first interaction phase.

Condition 1: The planning module may determine, based on a magnitude relationship between a threshold benefit difference and a decision benefit difference between a target decision solution with a first highest decision benefit and a target decision solution with a second highest decision benefit in the target decision solution set, whether a condition for entering the second interaction phase is met. When the decision benefit difference between the target decision solution with the first highest decision benefit and the target decision solution with the second highest decision benefit in the target decision solution set is greater than the threshold benefit difference, the planning module determines that the condition for entering the second interaction phase is met.

Condition 2: The planning module may determine, based on a comparison result between an actual motion track of the game target at a predetermined moment and a track that is of the game target and that is predicted in a first decision solution at a predetermined moment, whether the condition for entering the second interaction phase is met.

In a case of Condition 2, when the planning module determines that the actual motion track of the game target at the predetermined moment is highly consistent with the motion track that is of the game target and that is predicted in the first decision solution at the predetermined moment, the planning module determines that the condition for entering the second interaction phase is met. In this case, the first decision solution used in the first interaction phase is the same as a second decision solution used in the second interaction phase.

In another case of Condition 2, when the planning module determines that the actual motion track of the game target at the predetermined moment is completely inconsistent with the motion track that is of the game target and that is predicted in the first decision solution at the predetermined moment, the planning module determines that the condition for entering the second interaction phase is met. It may be understood that, when the planning module determines that the actual motion track of the game target at the predetermined moment is completely inconsistent with the motion track that is of the game target and that is predicted in the target decision solution (for example, the "preemption with avoidance") at the predetermined moment, it indicates that the motion track of the game target is completely unexpected, and it means that the current decision solution used for game interaction is definitely not applicable. In this case, the planning module needs to adjust a target decision solution A currently used for game interaction to a target decision solution (for example, a target decision solution B) that is more suitable for the current game. The decision solution B may be obtained from the target decision solution set. For example, if the current ego vehicle finds that the preemption with avoidance policy is no longer applicable (the game target may not yield as expected but preempt without speeding down), a more appropriate target decision solution may be obtained from the decision solution set, for example, the yielding with avoidance, after determining the decision solution B, the planning module may determine that the interaction relationship between the current ego vehicle and the game target is clear, and the second interaction phase is entered.

Further, the planning module may further combine Condition 1 and Condition 2, to jointly determine whether the condition for entering the second interaction phase is met.

When it is determined, by combining Condition 1 and Condition 2, whether the condition for entering the second interaction phase is met, if a result of determining, based on Condition 1, whether the condition for entering the second interaction phase is met is inconsistent with a result of determining, based on Condition 2, whether the condition for entering the second interaction phase is met, the result of determining, based on Condition, whether the condition for entering the second interaction phase is met is mainly used, that is, a priority of Condition 2 is higher than a priority of Condition 1. A reason for this is that: It should be noted that a consistent/inconsistent jump is usually because the game target does not decide based on a traffic rule or a general driving habit, this may be contrary to a cost assessment, and a priority of the jump is higher than that of a benefit-based jump.

Optionally, the planning module may perform determining of consistency or inconsistency based on a horizontal and vertical action sequence of the game target.

Based on the foregoing second aspect, when the planning module determines whether the predicted track of the game target at the predetermined moment is consistent with the real track of the game target at the predetermined moment, the planning module may determine a future status (namely, the predicted track) of the game target at the predetermined moment based on a continuous historical state change, and based on a predicted action sequence of the game target in a decision solution selected for interaction and an actual action sequence of the game target at each moment. In a determining process, horizontal and vertical can be distinguished.

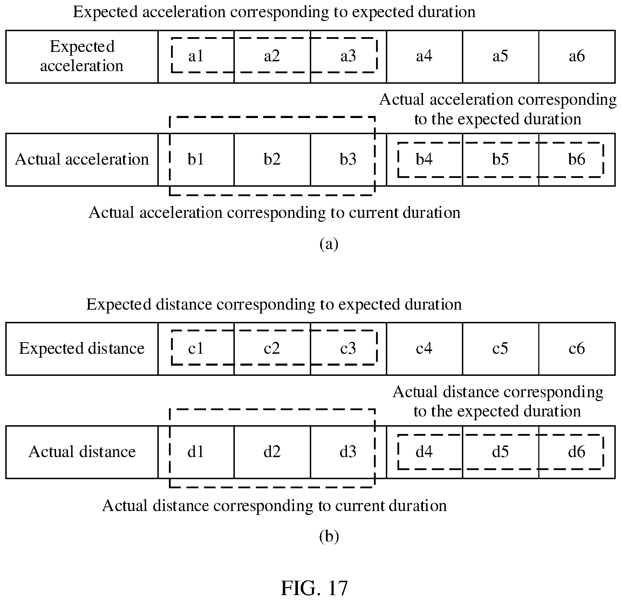

For example, the game target is a motor vehicle. An expected acceleration sequence and an actual acceleration sequence are processed by using a statistical data processing method, to obtain a longitudinal action sequence shown in (a) in FIG. 17.

It can be learned, based on content shown in (a) in FIG. 17, a1 to a3 are an expected acceleration change status of the game target in expected duration determined by the planning module, b1 to b3 are an actual acceleration change status of the game target in current duration, and b4 to b6 are an actual acceleration change status of the game target in the expected duration. If a difference fluctuation between a1 to a3 and b4 to b6 exceeds a threshold range, the planning module determines that a track result of the game target at the predetermined moment is inconsistent with the motion track that is of the game target and that is predicted in the first decision solution at the predetermined moment; and if a difference fluctuation between a1 to a3 and b4 to b6 is within a threshold range, the planning module determines that a track result of the game target at the predetermined moment is consistent with the motion track that is of the game target and that is predicted in the first decision solution at the predetermined moment.

For example, the game target is a bicycle. An expected distance sequence and an actual distance sequence are processed by using a statistical data processing method, to obtain a horizontal action sequence shown in (b) in FIG. 17. Because a change of a horizontal action is usually irreversible, determining of horizontal consistency/inconsistency is affected by a historical determining result.

It can be learned, based on content shown in (b) in FIG. 17, c1 to c3 are an expected distance change status of the game target in expected duration determined by the planning module, d1 to d3 are an actual distance change status of the game target in current duration, and d4 to d6 are an actual distance change status of the game target in the expected duration. If a difference fluctuation between c1 to c3 and d4 to d6 exceeds a threshold range, the planning module determines that a track result of the game target at the predetermined moment is inconsistent with the motion track that is of the game target and that is predicted in the first decision solution at the predetermined moment; and if a difference fluctuation between c1 to c3 and d4 to d6 is within a threshold range, the planning module determines that a track result of the game target at the predetermined moment is consistent with the motion track that is of the game target and that is predicted in the first decision solution at the predetermined moment.

In conclusion, in this application, an interaction game process may be divided into a plurality of interaction phases based on an actual case.

The first interaction phase may be referred to as a critical state. The critical state may be understood as that the interaction relationship between the ego vehicle and the game target is unclear, that is, the decision solution for the interaction between the ego vehicle and the game target may change at any time.

The second interaction phase may be referred to as a confidence state. The confidence state may be understood as that the interaction relationship between the ego vehicle and the game target is clear, that is, the decision solution for the interaction between the ego vehicle and the game target is determined.

For example, in a process of playing a game between the ego vehicle and the game target, as a game process continues, the ego vehicle approaches a decision solution. When a difference between a decision benefit of the approaching decision solution and a decision benefit of another decision solution is greater than a threshold benefit difference, it is considered that a game relationship is clear, and a jump from the critical state to the confidence state is completed.

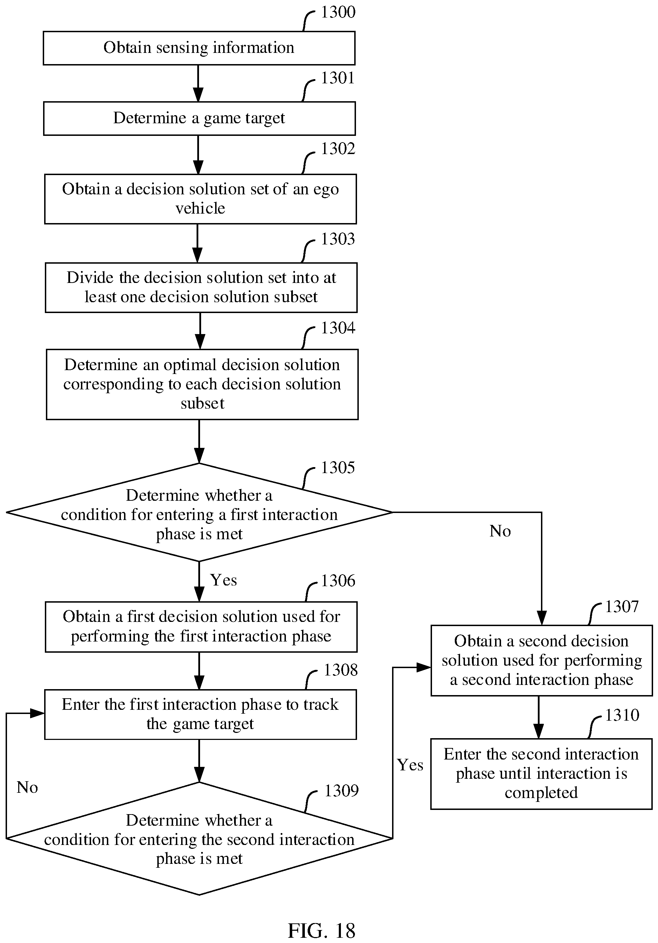

FIG. 18 shows overall procedure logic of the interaction game.

The described apparatus embodiment is merely an example. The units described as separate parts may or may not be physically separated, and parts displayed as units may or may not be physical units, may be located in one position, or may be distributed on a plurality of network units. Some or all of the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in combination with necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Although the present invention is described with reference to embodiments, in a process of implementing the present invention that claims protection, a person skilled in the art may understand and implement another variation of the disclosed embodiments by viewing the accompanying drawings, the disclosed content, and the accompanying claims. In the claims, "comprising" (comprising) does not exclude another component or another step, and "a" or "one" does not exclude a case of "plurality of". A single processor or another unit may implement several functions enumerated in the claims. Some measures are recorded in dependent claims that are different from each other, but this does not mean that these measures cannot be combined to produce a better effect.

The foregoing descriptions are merely specific implementations of this application, but are not intended to limit the protection scope of this application. Any variation or replacement readily figured out by a person skilled in the art within the technical scope disclosed in the present invention shall fall within the protection scope of this application. Therefore, the protection scope of this application shall be subject to the protection scope of the claims.

## Claims

1. An autonomous driving apparatus, comprising:
a processing apparatus, wherein the processing apparatus comprises a plurality of processor cores; and
at least a part of processor cores in the plurality of processor cores are fixedly allocated to a specified task set, fixed allocation means that the at least a part of processor cores in the plurality of processor cores are configured to process only the specified task set, and the specified task set is a non-empty set.

2. The apparatus according to claim 1, further comprising:
a sensing system, configured to obtain sensing information of an ego vehicle, wherein the sensing system comprises at least one of the following: a lidar, a millimeter-wave radar, a camera, and an ultrasonic radar; and
the specified task set comprises a sensing task, and the sensing task comprises that the at least a part of processor cores process information obtained by the sensing system and obtain environment information and obstacle information around a vehicle.

3. The apparatus according to claim 2, wherein
the obstacle information comprises at least one of the following: static obstacle information and dynamic obstacle information.

4. The apparatus according to any one of claims 1 to 3, further comprising:
a planning system, wherein
the specified task set comprises a planning task, and the planning task comprises that the at least a part of processor cores determine a driving planning policy of the vehicle based on motion information of the vehicle and the obstacle information.

5. The apparatus according to claim 4, wherein
the sensing task comprises at least one of the following: a lane detection (LD) task for identifying a lane line around the vehicle, vehicle detection (VD) for identifying another vehicle around the vehicle, and Radar and LiDar (RL) for performing fusion on different sensor information, to perform sensing and tracking on a key target around the vehicle, wherein the key target comprises a vulnerable road user (VRU); and
the planning task comprises at least one of the following: global route planning (Router), a finite status machine (FSM), and motion control (MOP) for the vehicle.

6. The apparatus according to claim 5, wherein
at least one processor core in the at least a part of processor cores is fixedly allocated to one task in the sensing task.

7. The apparatus according to claim 5, wherein
at least one processor core in the at least a part of processor cores is fixedly allocated to one task in the planning task.

8. The apparatus according to claim 6, wherein
the at least one processor core in the at least a part of processor cores is fixedly allocated for performing sensing and tracking on the key target around the vehicle, and the key target comprises the vulnerable road user (VRU).

9. The apparatus according to any one of claims 1 to 8, wherein the apparatus is further configured to:
determine at least one target based on the sensing information;
obtain a future motion track of the at least one target;
obtain a future motion track of the ego vehicle; and
determine a target, as a game target in the at least one target, of which future motion track overlaps the future motion track of the ego vehicle.

10. The apparatus according to claim 9, wherein the apparatus is further configured to:
obtain a decision solution set of the ego vehicle based on the sensing information;
obtain, from the decision solution set, a first decision solution used for performing a first interaction phase between the ego vehicle and the game target;
in a process of controlling, based on the first decision solution, the ego vehicle to drive, determine that the ego vehicle and the game target meet a condition for entering a second interaction phase;
obtain, from the decision solution set, a second decision solution used for performing the second interaction phase between the ego vehicle and the game target; and
control, based on the second decision solution, the ego vehicle to drive.

11. The apparatus according to claim 10, wherein
the first interaction phase is a phase in which an interaction relationship between the ego vehicle and the game target is unclear, and the second interaction phase is a phase in which the interaction relationship between the ego vehicle and the game target is clear.

12. The apparatus according to any one of claims 9 to 11, wherein the apparatus is further configured to:
continuously track a status of the game target in a process in which the ego vehicle and the game target perform the first interaction phase.

13. A vehicle, comprising:
the apparatus according to any one of claims 1 to 12.
